# EUROPEAN PATENT APPLICATION

(11) **EP 4 624 079 A1**
(43) Date of publication of application: **01.10.2025**
(21) Application number: 23948471.0
(22) Date of filing: 09.08.2023
(51) Int. Cl.: B23B 31/10, B23P 23/04, B23K 26/342, B33Y 80/00

(54) **CHUCK CLAW, METHOD FOR PRODUCING CHUCK CLAW, METHOD FOR PROCESSING WORKPIECE, METHOD FOR REPAIRING CHUCK CLAW, HYBRID MACHINE TOOL, AND PROGRAM**

(71) Applicant: Yamazaki Mazak Corporation, Niwa-gun, Aichi 480-0197 (JP)
(72) Inventor: KITAMOTO, Shinichiro, Niwa-gun, Aichi 480-0197 (JP); SUZUKI, Atsushi, Niwa-gun, Aichi 480-0197 (JP); OUCHI, Seigo, Niwa-gun, Aichi 480-0197 (JP)
(74) Representative: TBK
(86) International application number: PCT/JP2023/029049
(87) International publication number: WO 2025/032751

(57) **Abstract**

A chuck jaw includes a foot portion, a jaw body, and a metal layer. The foot portion is configured to be mounted on a chuck body. The metal layer is configured to be added on the jaw body and come into contact with a workpiece. The metal layer includes a first metal material. The jaw body includes a second metal material. The first metal material has a thermal conductivity lower than a thermal conductivity of the second metal material.

## Description

### Technical Field

The present invention relates to a chuck jaw, a method of fabricating the chuck jaw, a method of machining a workpiece, a method of repairing the chuck jaw, a hybrid machine tool, and a program.

### Background Art

A technique of disposing a heat insulating material between a chuck jaw and a holder that holds the chuck jaw is known.

A related technique includes a thermally insulated chuck disclosed in Patent Literature 1. In the thermally insulated chuck disclosed in Patent Literature 1, a heat insulating material is interposed between a chuck jaw portion and a chuck jaw holder. A heat insulating material is also interposed between the chuck jaw holder and a mounting portion of a spindle head.

### Citation List

### Patent Literature

PTL1: Microfilm of Japanese Utility Model Application No. 51-177244 (Japanese Unexamined Utility Model Application Publication No. 53-94907).

### Summary of Invention

### Technical Problem

An object of the present invention is to provide a technique of reducing heat conduction from a workpiece to a chuck jaw at low cost.

### Solution to Problem

A chuck jaw according to some embodiments includes a foot portion, a jaw body and a metal layer. The foot portion is configured to be mounted on a chuck body. The metal layer is configured to be added on the jaw body and come into contact with a workpiece. The metal layer includes a first metal material. The jaw body includes a second metal material. The first metal material has a thermal conductivity lower than a thermal conductivity of the second metal material.

A method of fabricating a chuck jaw according to some embodiments includes mounting, on a chuck body rotatable about a first axis, a foot portion of a first block including the foot portion and a jaw body. A metal layer that is to come into contact with a workpiece is added on the jaw body with the foot portion being mounted on the chuck body. The metal layer includes a first metal material. The jaw body includes a second metal material. The first metal material has a thermal conductivity lower than a thermal conductivity of the second metal material.

A method of machining a workpiece according to some embodiments includes fabricating a first chuck jaw. A workpiece is mounted on a plurality of chuck jaws including the first chuck jaw. The workpiece is machined. Fabricating the first chuck jaw includes mounting, on a chuck body rotatable about a first axis, a foot portion of a first block including the foot portion and a jaw body. A metal layer is added on the jaw body with the foot portion being mounted on the chuck body. Machining the workpiece includes adding a third material on the workpiece using an additive manufacturing apparatus with the metal layer of the first chuck jaw being in contact with the workpiece. The metal layer includes a first metal material. The jaw body includes a second metal material. The first metal material has a thermal conductivity lower than a thermal conductivity of the second metal material.

A method of repairing a chuck jaw according to some embodiments includes a method of repairing the chuck jaw described above. The method of repairing the chuck jaw includes forming a base surface by cutting at least part of the metal layer. The metal layer is reformed by adding the first metal material on the base surface. The metal layer is cut to smooth the surface of the reformed metal layer.

A hybrid machine tool according to some embodiments includes an additive manufacturing apparatus, a cutting tool, a first supporter, a first mover, a second mover, and a controller. The additive manufacturing apparatus includes a material supplying device and a first head configured to emit a laser. The cutting tool includes a second head configured to support a tool. The first supporter is configured to support a workpiece via a plurality of chuck jaws including a first chuck jaw. The first mover is configured to move the first head relative to the first supporter. The second mover is configured to move the second head relative to the first supporter. The controller is configured to control at least the additive manufacturing apparatus, the cutting tool, the first supporter, the first mover, and the second mover. The first supporter includes a chuck body, a jaw drive device, and a first rotary drive device. A foot portion of the first chuck jaw including the foot portion and a jaw body is mounted the chuck body. The chuck body is rotatable about a first axis. The jaw drive device is configured to move the plurality of chuck jaws in a first direction separating from the first axis or in a second direction approaching the first axis. The first rotary drive device is configured to rotate the chuck body about the first axis. The controller is capable of executing a jaw fabricating mode performed with the foot portion being mounted on the chuck body and an additive manufacturing mode performed with the workpiece being gripped by the plurality of chuck jaws including the first chuck jaw. The jaw fabricating mode includes adding a metal layer including a first metal material on the jaw body including a second metal material using the additive manufacturing apparatus, the first metal material having a thermal conductivity lower than a thermal conductivity of the second metal material. A surface of the metal layer is smoothed by cutting the metal layer using the cutting tool. The additive manufacturing mode includes adding a third material on the workpiece that is in contact with the metal layer of the first chuck jaw using the additive manufacturing apparatus.

A program according to some embodiments includes adding a metal layer including a first metal material on a jaw body including a second metal material with a foot portion of a first block including the foot portion and the jaw body being mounted on a chuck body rotatable about a first axis. The first metal material has a thermal conductivity lower than a thermal conductivity of the second metal material. A cut surface that is to come into contact with a workpiece is formed by cutting the metal layer with the foot portion being mounted on the chuck body.

### Effects of Invention

The present invention provides a technique of reducing heat conduction from a workpiece to a chuck jaw at low cost.

### Brief Description of Drawings

[FIG. 1] FIG. 1 is a cross-sectional diagram schematically illustrating a state in which a chuck jaw according to a first embodiment is mounted on a chuck body.
[FIG. 2] FIG. 2 is a cross-sectional diagram schematically illustrating a state in which the chuck jaw according to the first embodiment is mounted on the chuck body.
[FIG. 3] FIG. 3 is a cross-sectional diagram schematically illustrating a state in which a plurality of blocks including a first block and a second block are mounted on the chuck body.
[FIG. 4] FIG. 4 is a cross-sectional diagram schematically illustrating how the jaw body is cut.
[FIG. 5] FIG. 5 is a cross-sectional diagram schematically illustrating how a metal layer is added on the jaw body.
[FIG. 6] FIG. 6 is a cross-sectional diagram schematically illustrating how material is added on a workpiece in a comparative example.
[FIG. 7] FIG. 7 is a diagram as viewed in a direction of a first axis, illustrating how a workpiece is gripped by a plurality of chuck jaws.
[FIG. 8] FIG. 8 is a cross-sectional view taken in a direction of arrows A-A in FIG. 7.
[FIG. 9] FIG. 9 is a cross-sectional diagram schematically illustrating how the plurality of chuck jaws are capable of gripping a plurality of kinds of workpieces.
[FIG. 10] FIG. 10 is a cross-sectional diagram schematically illustrating the chuck jaw according to the first embodiment.
[FIG. 11] FIG. 11 is a cross-sectional diagram schematically illustrating a chuck jaw according to a first modification of the first embodiment.
[FIG. 12] FIG. 12 is a perspective diagram schematically illustrating a state in which the workpiece is gripped by the plurality of chuck jaws.
[FIG. 13] FIG. 13 is a cross-sectional diagram schematically illustrating a chuck jaw according to a second modification of the first embodiment.
[FIG. 14] FIG. 14 is a cross-sectional diagram schematically illustrating a chuck jaw according to a third modification of the first embodiment.
[FIG. 15] FIG. 15 is a cross-sectional diagram schematically illustrating a chuck jaw according to a fourth modification of the first embodiment.
[FIG. 16] FIG. 16 is a cross-sectional diagram schematically illustrating how the first block is mounted on the chuck body.
[FIG. 17] FIG. 17 is a cross-sectional diagram schematically illustrating how the first block is mounted on the chuck body.
[FIG. 18] FIG. 18 is a cross-sectional diagram schematically illustrating how the jaw body is cut.
[FIG. 19] FIG. 19 is a cross-sectional diagram schematically illustrating how a metal layer is added on the jaw body.
[FIG. 20] FIG. 20 is a cross-sectional diagram schematically illustrating how the metal layer is added on the jaw body.
[FIG. 21] FIG. 21 is a cross-sectional diagram schematically illustrating how the metal layer is cut.
[FIG. 22] FIG. 22 is a cross-sectional diagram schematically illustrating how the metal layer is cut.
[FIG. 23] FIG. 23 is a cross-sectional diagram schematically illustrating how groove are formed on a surface of the metal layer.
[FIG. 24] FIG. 24 is a cross-sectional diagram schematically illustrating how a first chuck jaw is removed from the chuck body.
[FIG. 25] FIG. 25 is a cross-sectional diagram schematically illustrating how the first chuck jaw is removed from the chuck body.
[FIG. 26] FIG. 26 is a diagram schematically illustrating how the first chuck jaw is carried to a stocker.
[FIG. 27] FIG. 27 is a diagram schematically illustrating how the first chuck jaw is carried from the stocker.
[FIG. 28] FIG. 28 is a cross-sectional diagram schematically illustrating how the first chuck jaw is mounted on the chuck body.
[FIG. 29] FIG. 29 is a cross-sectional diagram schematically illustrating how the workpiece is mounted on the plurality of chuck jaws.
[FIG. 30] FIG. 30 is a cross-sectional diagram schematically illustrating how the workpiece is cut.
[FIG. 31] FIG. 31 is a cross-sectional diagram schematically illustrating how the workpiece is preheated.
[FIG. 32] FIG. 32 is a cross-sectional diagram schematically illustrating how a third material is added on the workpiece.
[FIG. 33] FIG. 33 is a cross-sectional diagram schematically illustrating how the workpiece is cut.
[FIG. 34] FIG. 34 is a cross-sectional diagram schematically illustrating how the workpiece is transferred from a first supporter to a second supporter.
[FIG. 35] FIG. 35 is a cross-sectional diagram schematically illustrating how a fourth material is added on the workpiece.
[FIG. 36] FIG. 36 is a cross-sectional diagram schematically illustrating how the workpiece is cut.
[FIG. 37] FIG. 37 is a cross-sectional diagram schematically illustrating how a step of a method of repairing the chuck jaw is executed.
[FIG. 38] FIG. 38 is a cross-sectional diagram schematically illustrating how a step of the method of repairing the chuck jaw is executed.
[FIG. 39] FIG. 39 is a cross-sectional diagram schematically illustrating how a step of the method of repairing the chuck jaw is executed.
[FIG. 40] FIG. 40 is a cross-sectional diagram schematically illustrating how a step of the method of repairing the chuck jaw is executed.
[FIG. 41] FIG. 41 is a flowchart illustrating an example of a method of fabricating the chuck jaw according to the first embodiment.
[FIG. 42] FIG. 42 is a flowchart illustrating an example of a method of machining the workpiece according to the first embodiment.
[FIG. 43] FIG. 43 is a flowchart illustrating an example of a method of repairing the chuck jaw according to the first embodiment.
[FIG. 44] FIG. 44 is a diagram schematically illustrating a hybrid machine tool according to a second embodiment.
[FIG. 45] FIG. 45 is a diagram schematically illustrating a storage medium according to an embodiment that stores a program.

### Description of Embodiments

Hereinafter, a chuck jaw 1, a method of fabricating a chuck jaw, a method of machining a workpiece, a method of repairing a chuck jaw, a hybrid machine tool 100, and a program 922 according to an embodiment will be described with reference to the drawings. In the following description of embodiments, identical reference numerals are given to portions and members having identical functions, and repetitive descriptions of the portions and members with the identical reference numerals are omitted.

### (Definition of Directions)

As used herein, a direction separating from a rotation axis of a chuck body 31 will be defined as a "first direction DR1". A direction approaching the rotation axis of the chuck body 31 will be defined as a "second direction DR2". Hereinafter, the rotation axis of the chuck body 31 will be referred to as a "first axis AX".

As used herein, a direction along the first axis AX and from the chuck jaw 1 toward the chuck body 31 will be defined as a "third direction DR3". A direction opposite to the third direction DR3 will be defined as a "fourth direction DR4".

### (First Embodiment)

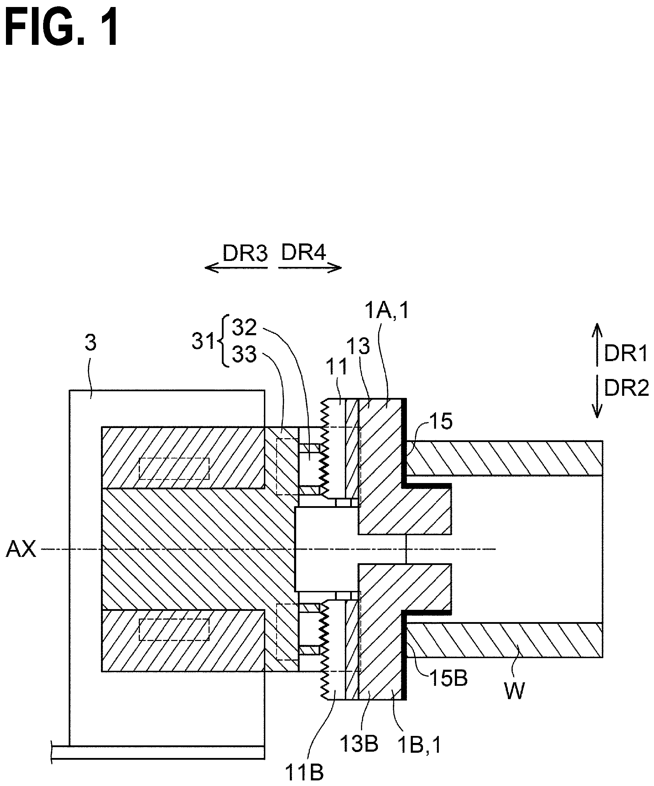

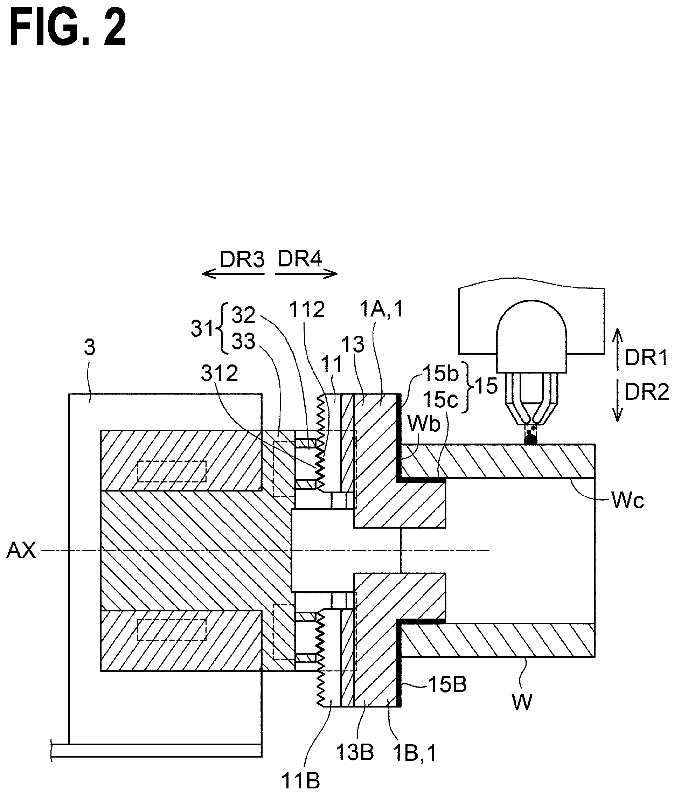

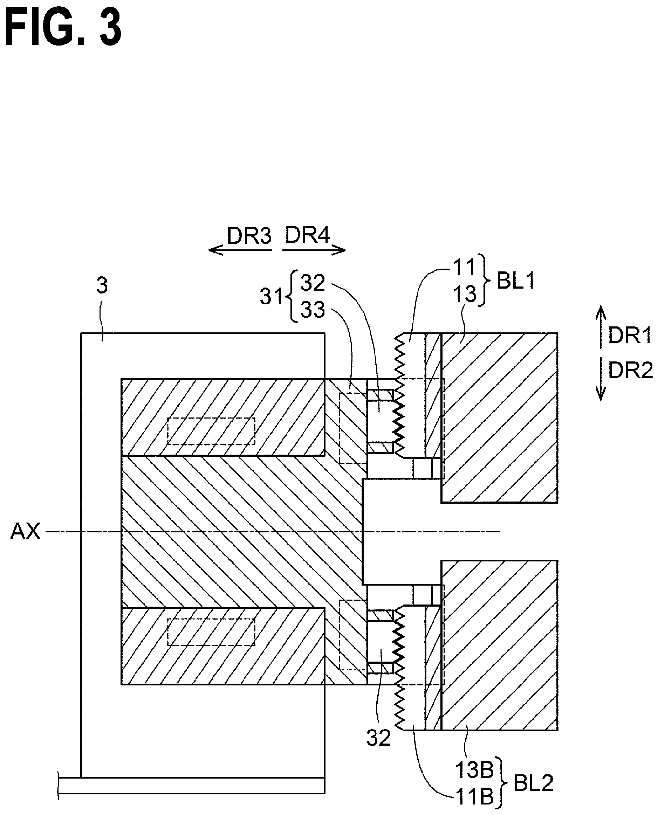

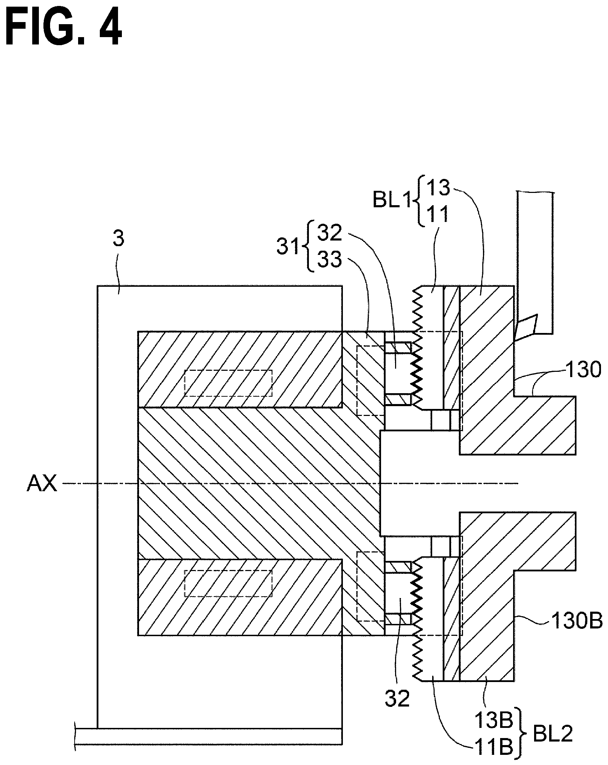

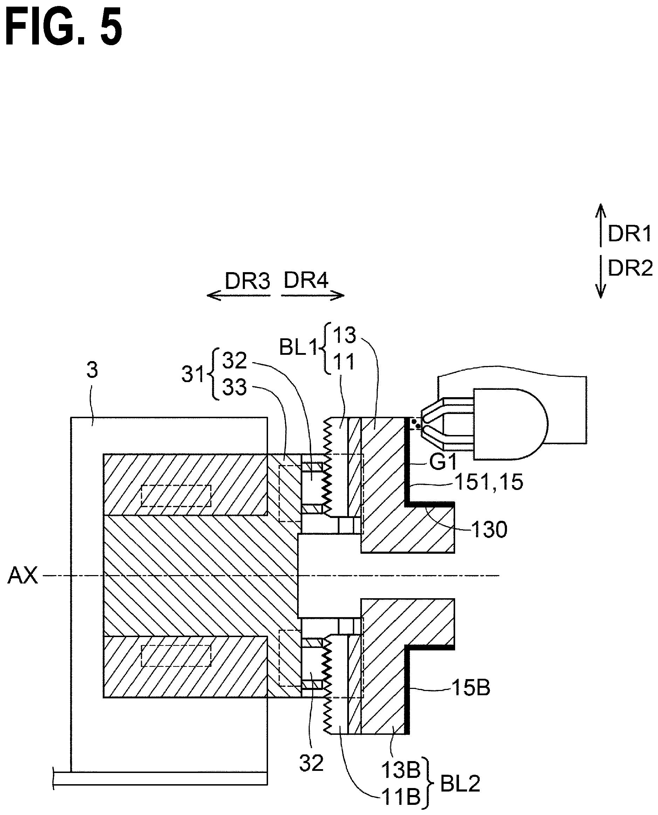

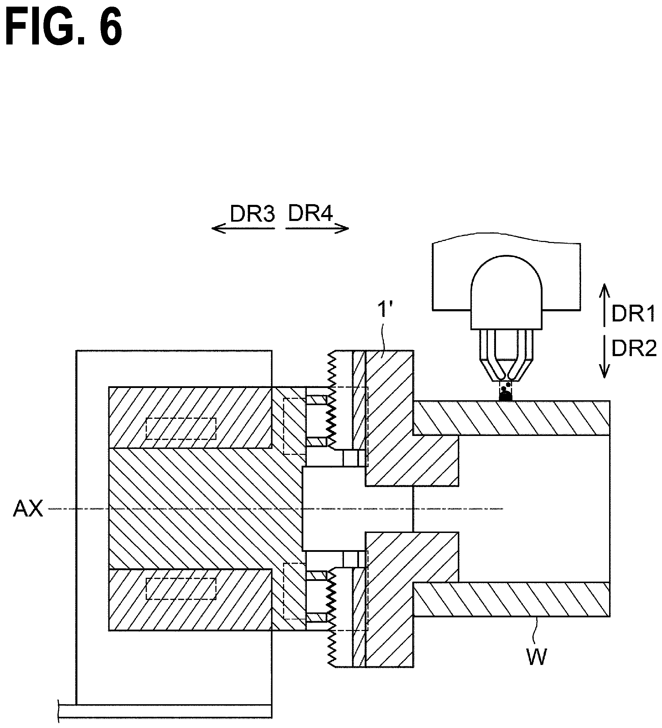

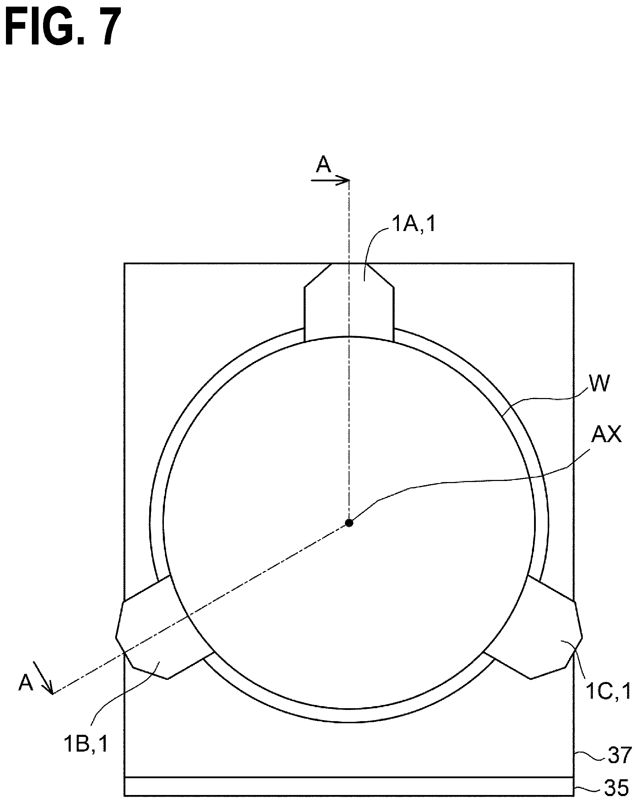

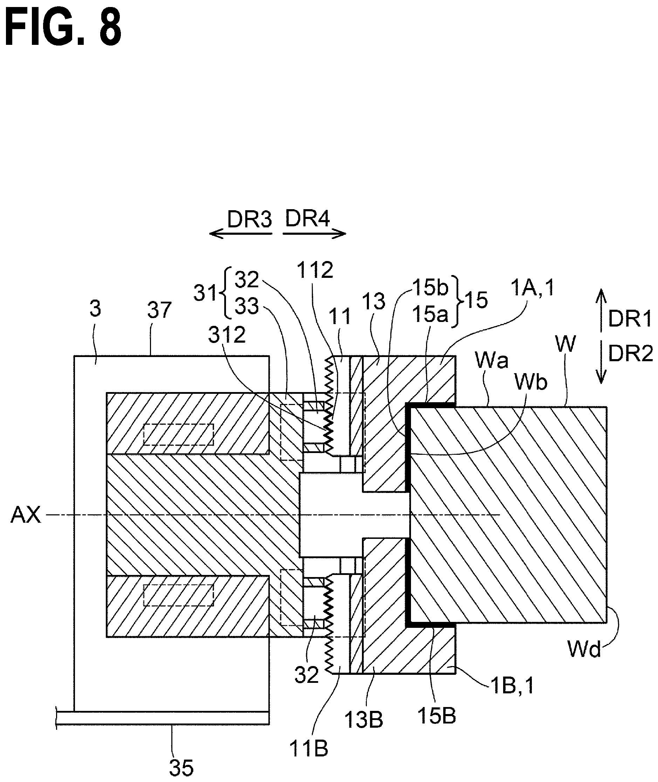

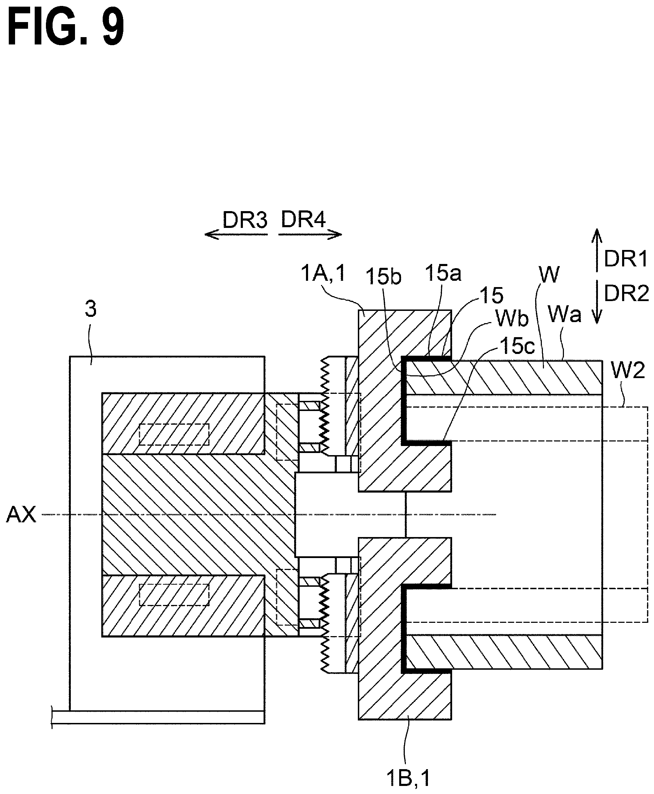

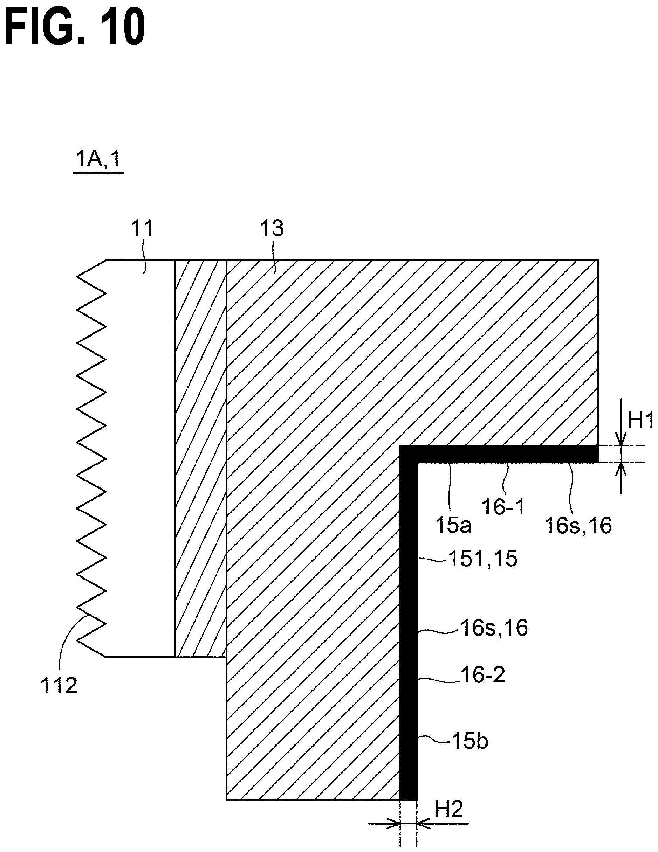

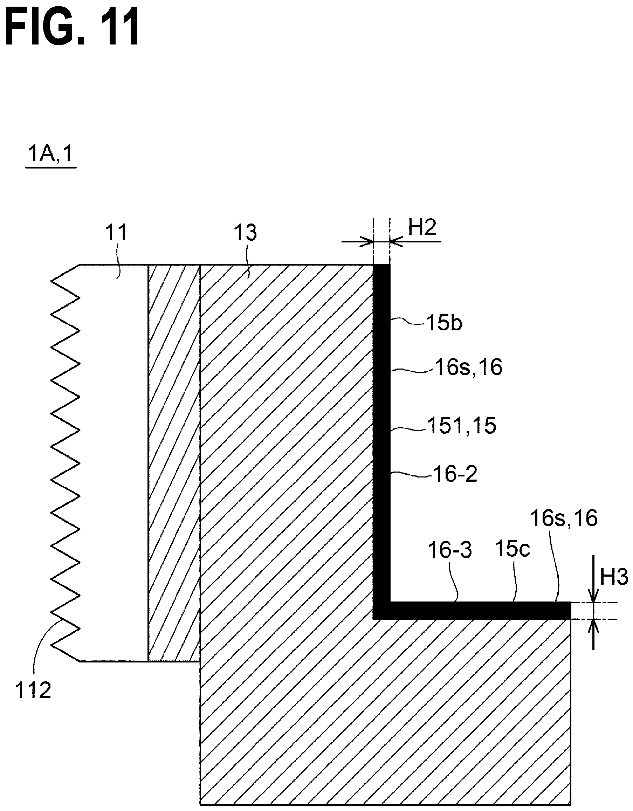

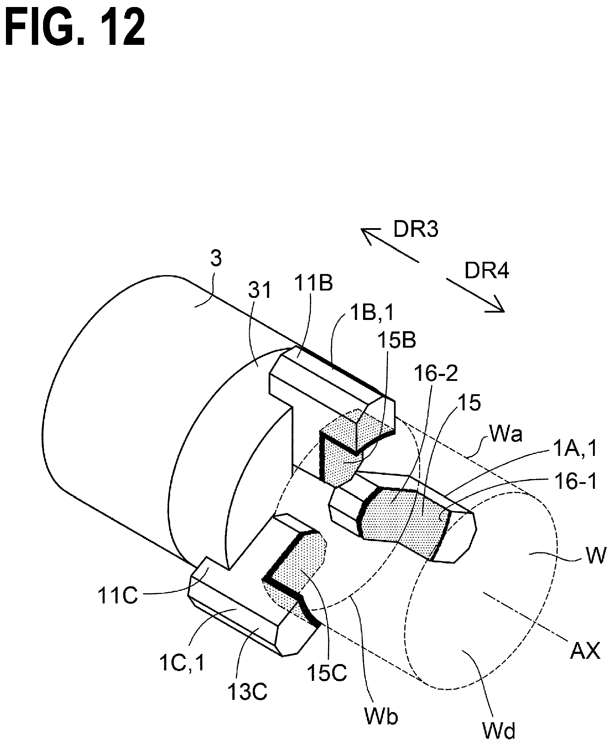

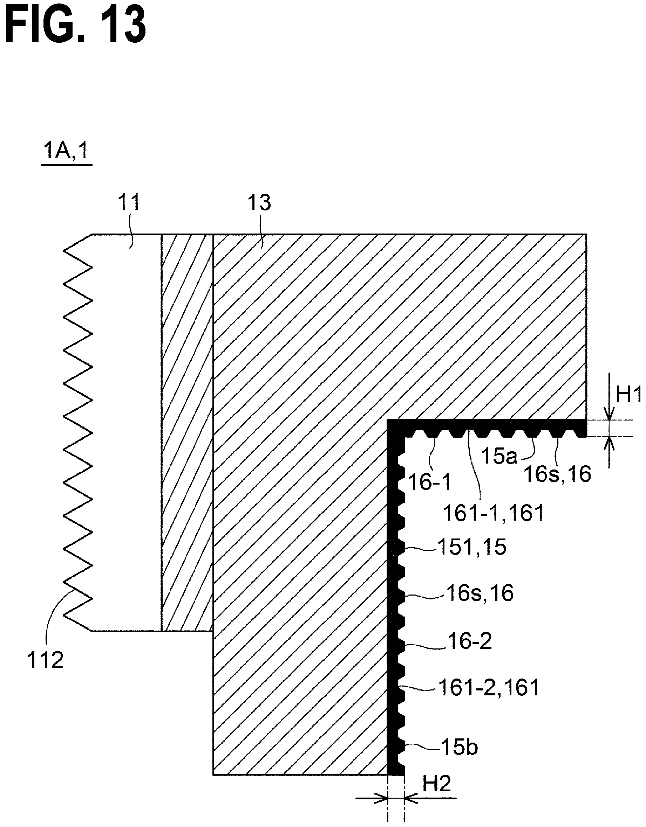

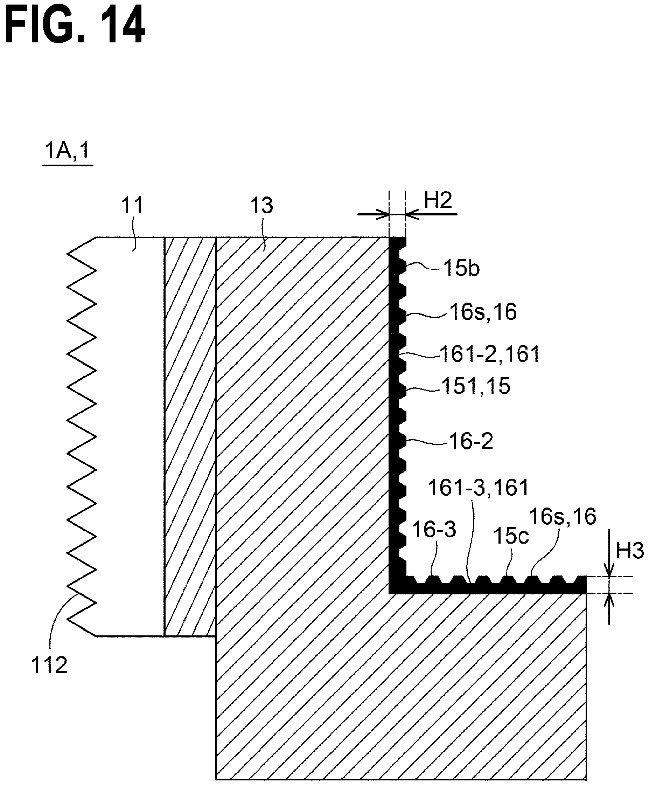

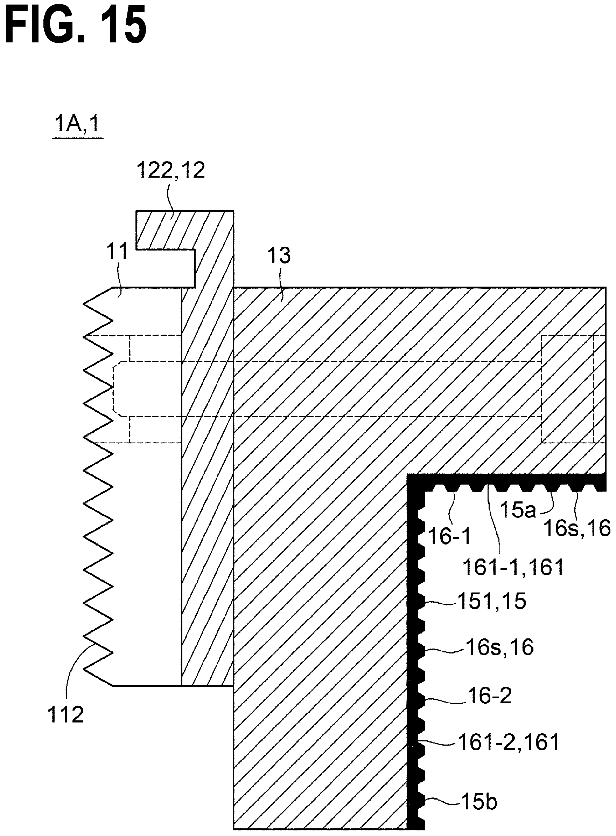

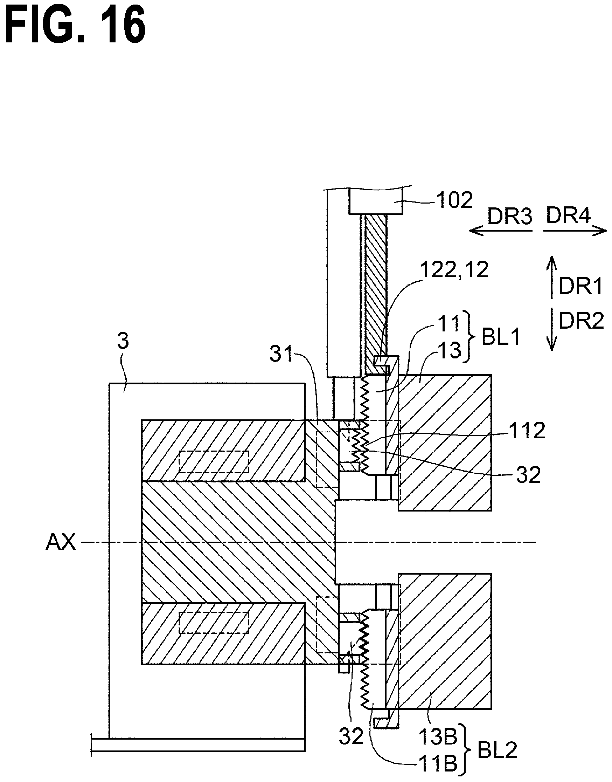

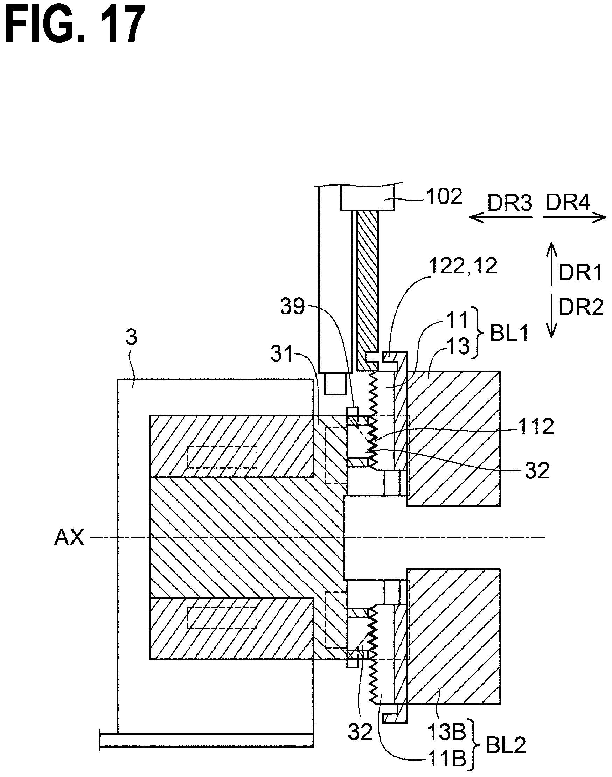

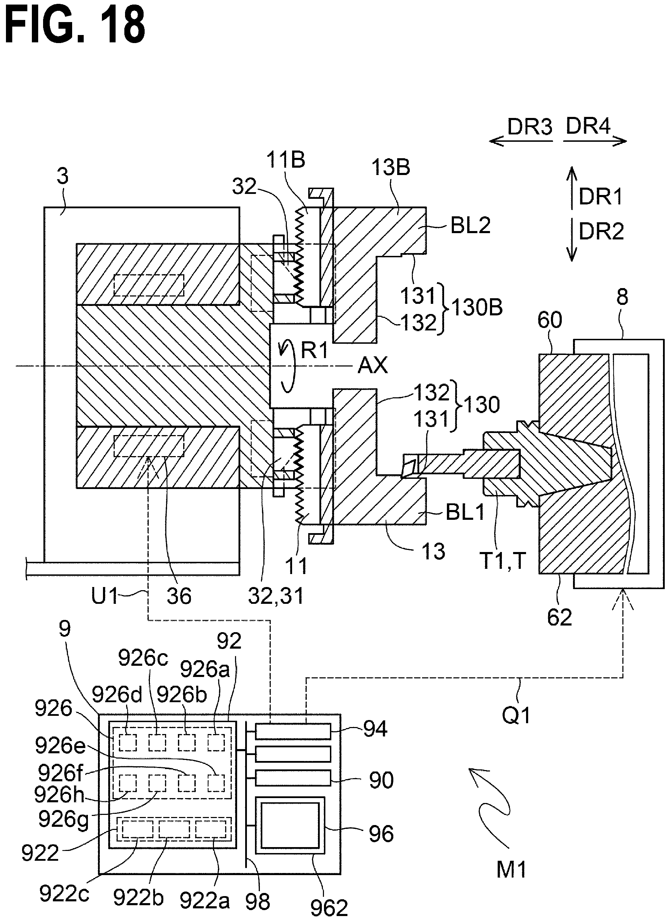

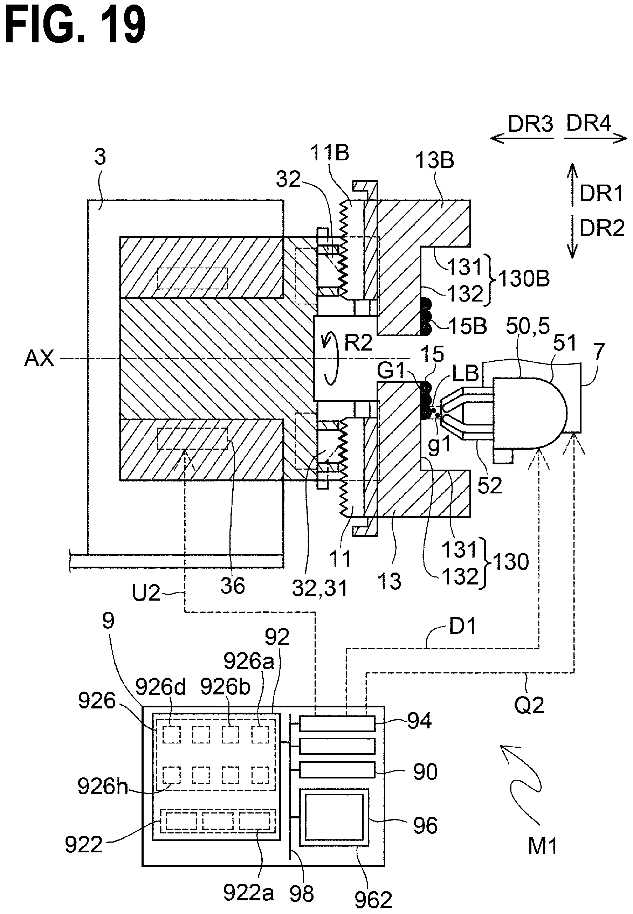

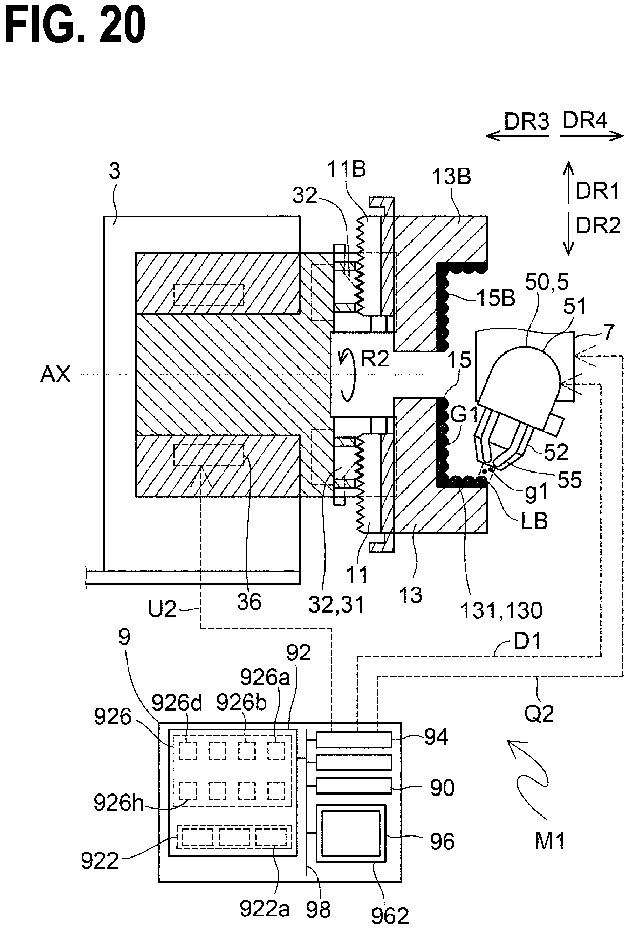

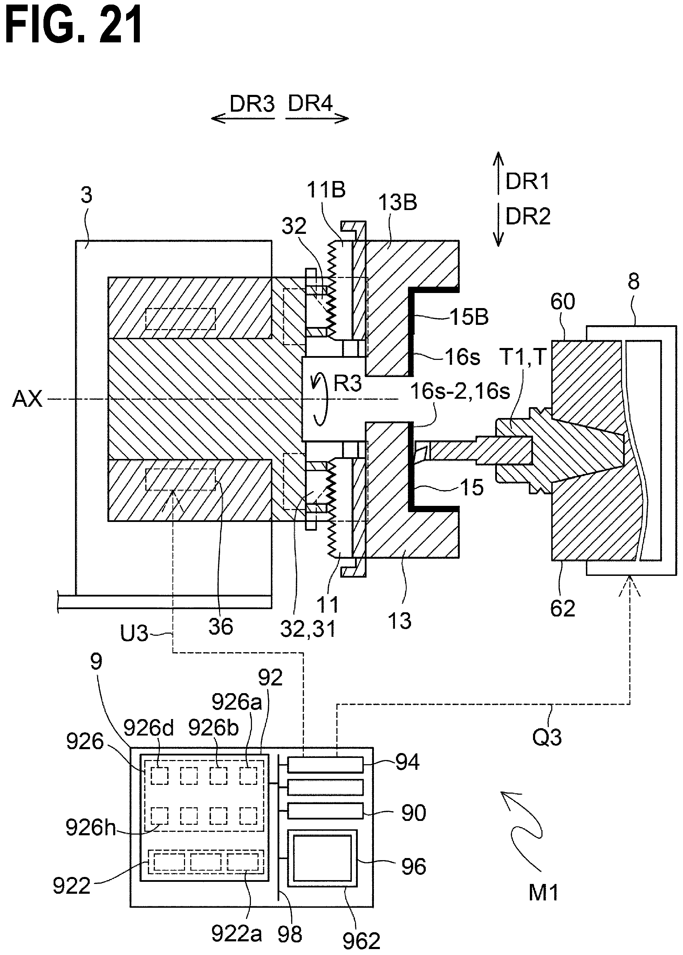

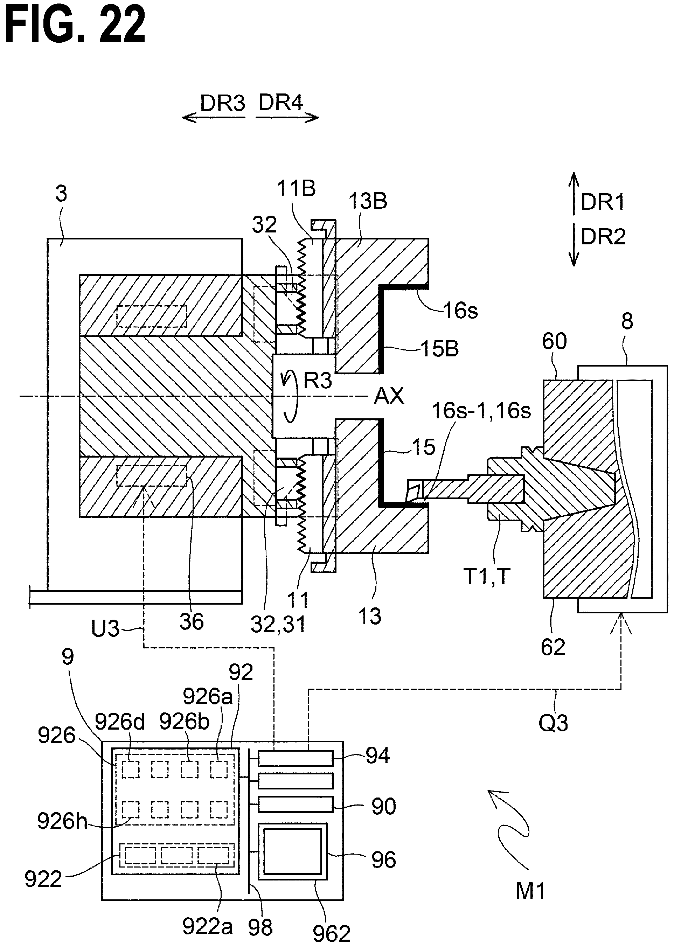

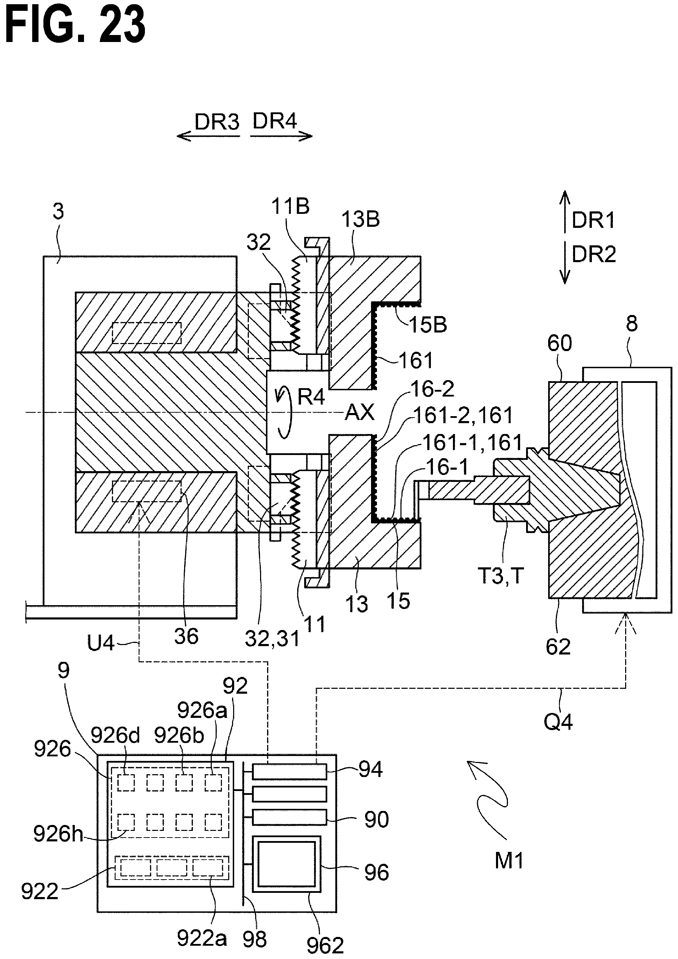

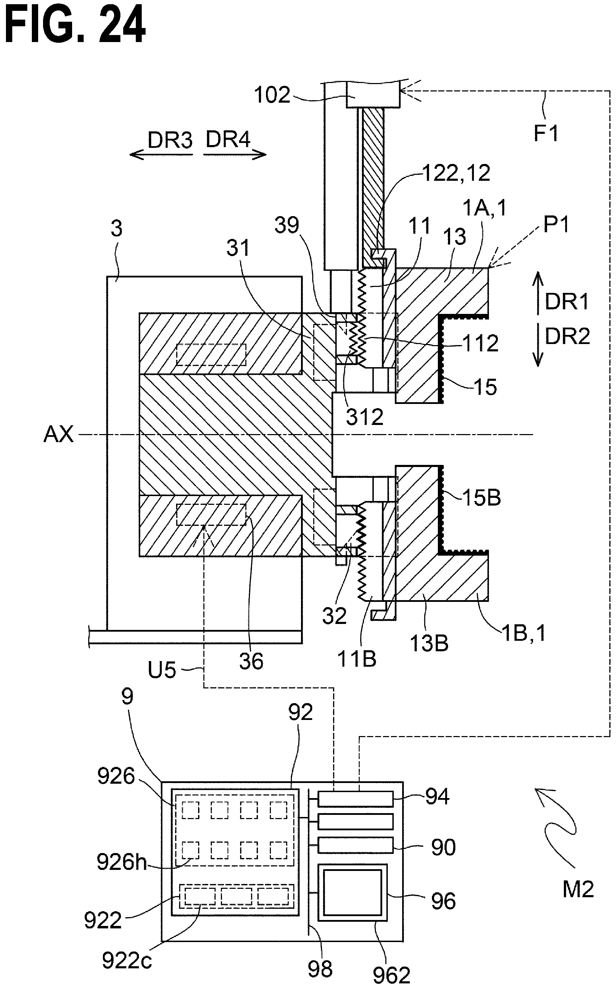

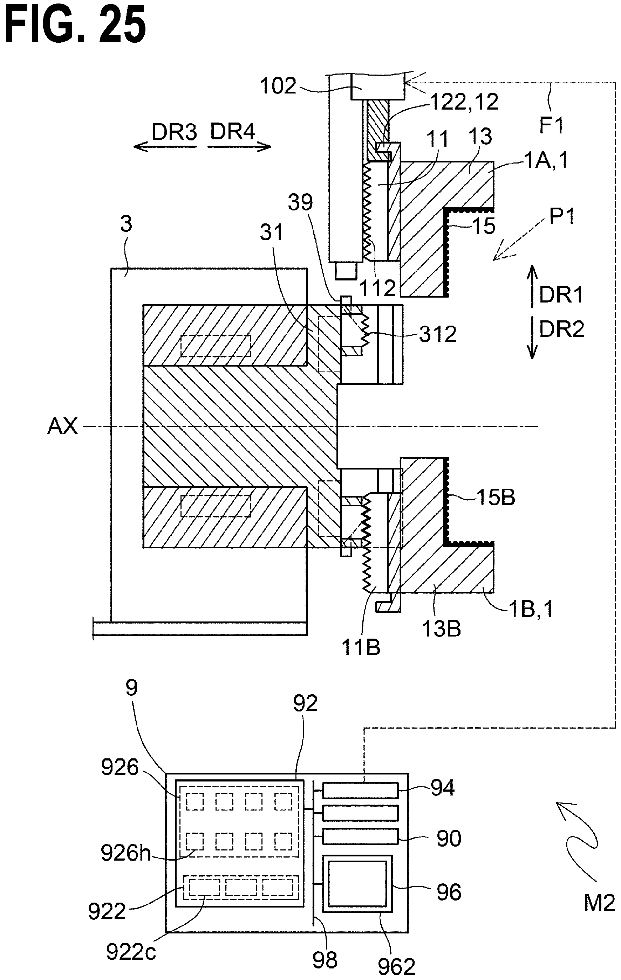

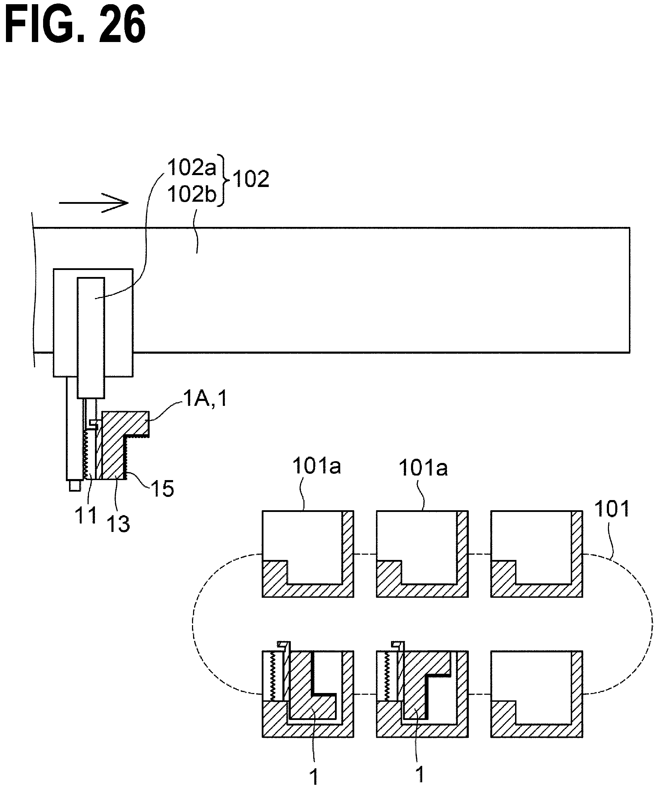

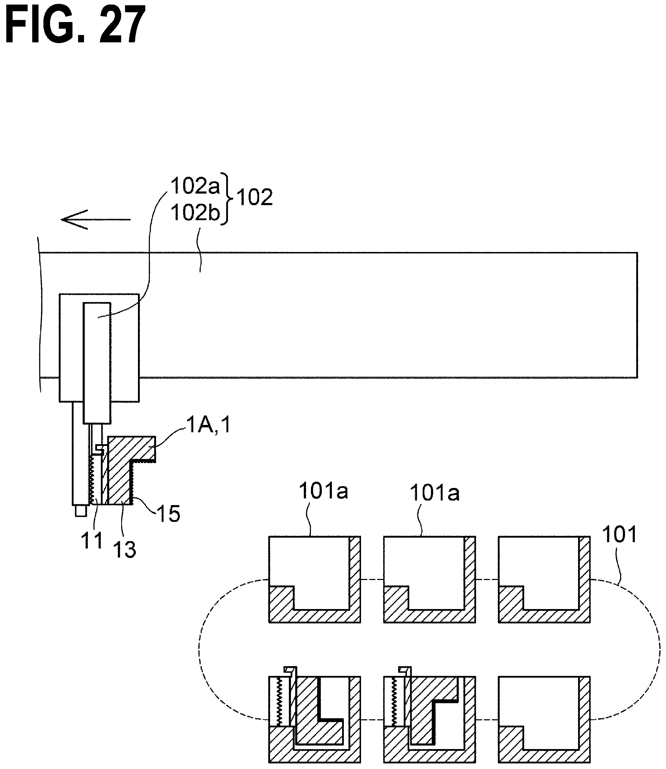

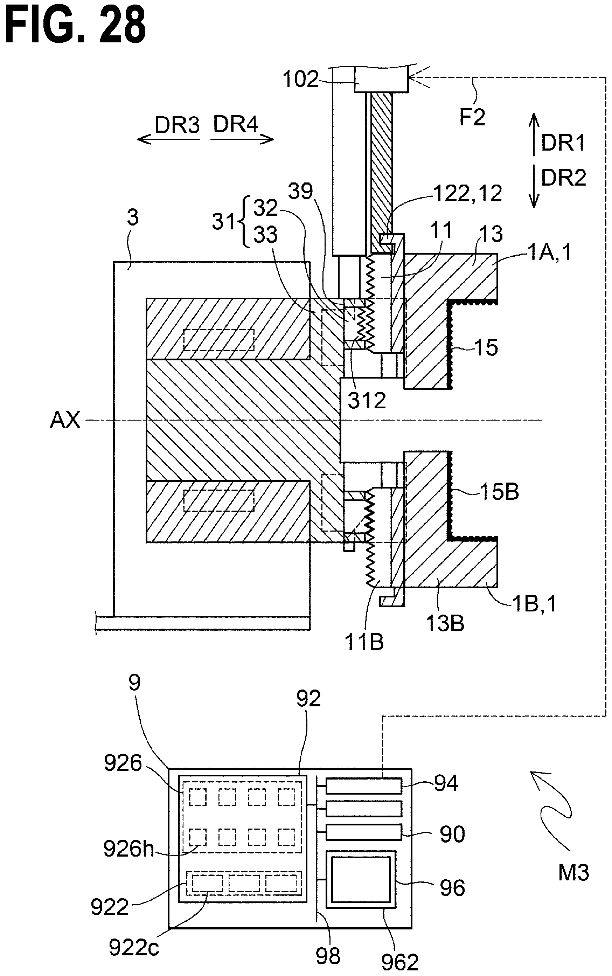

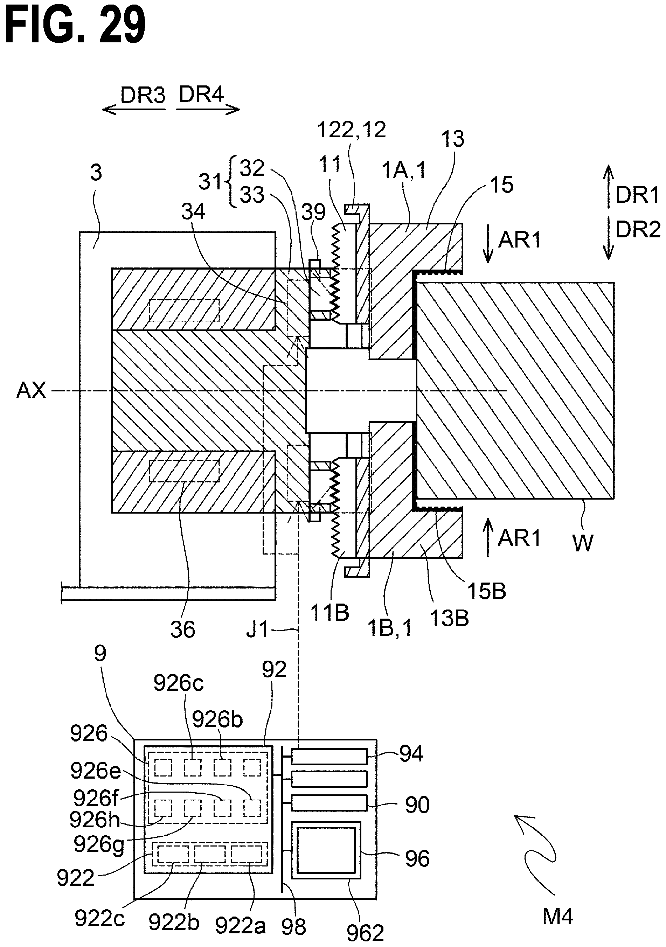

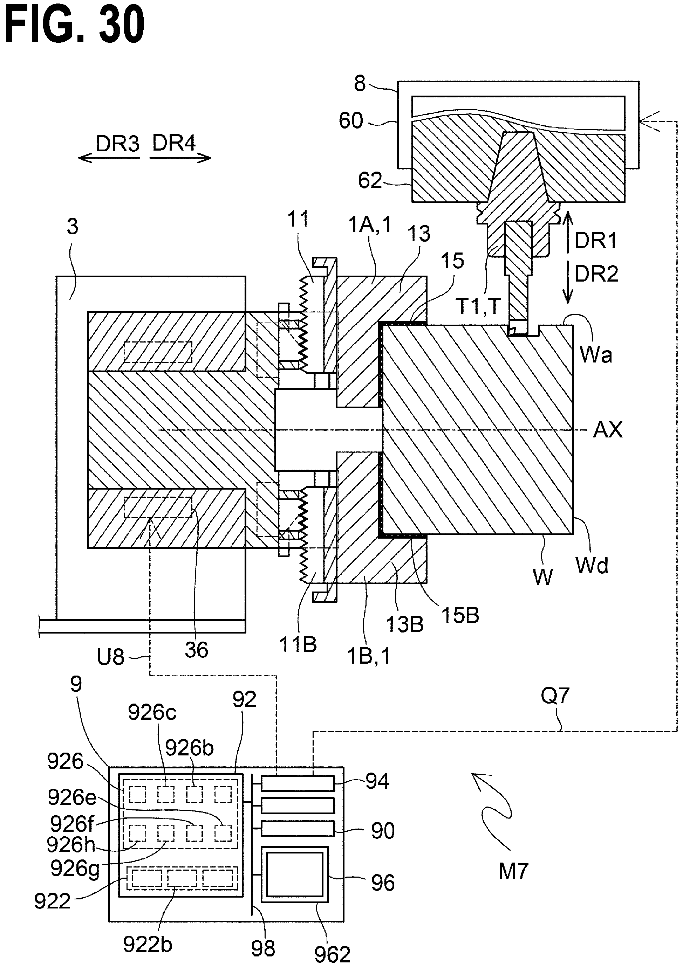

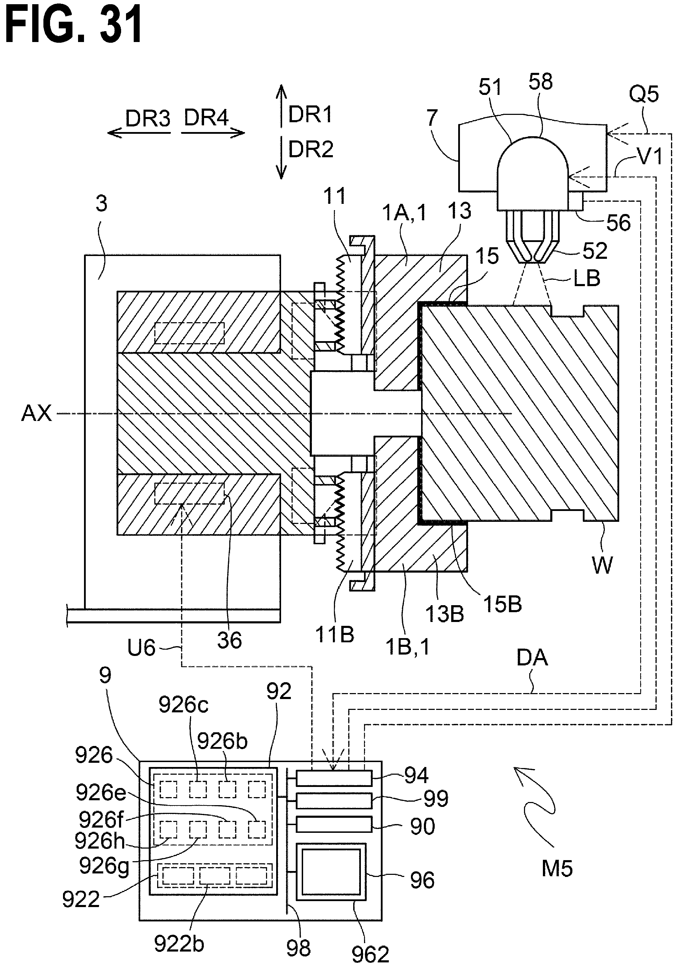

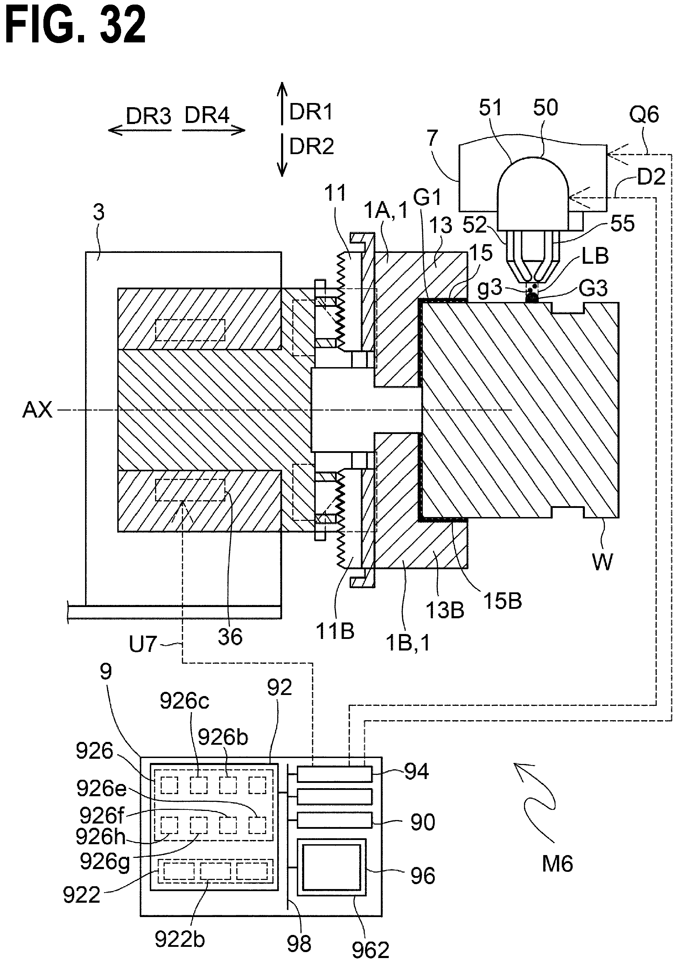

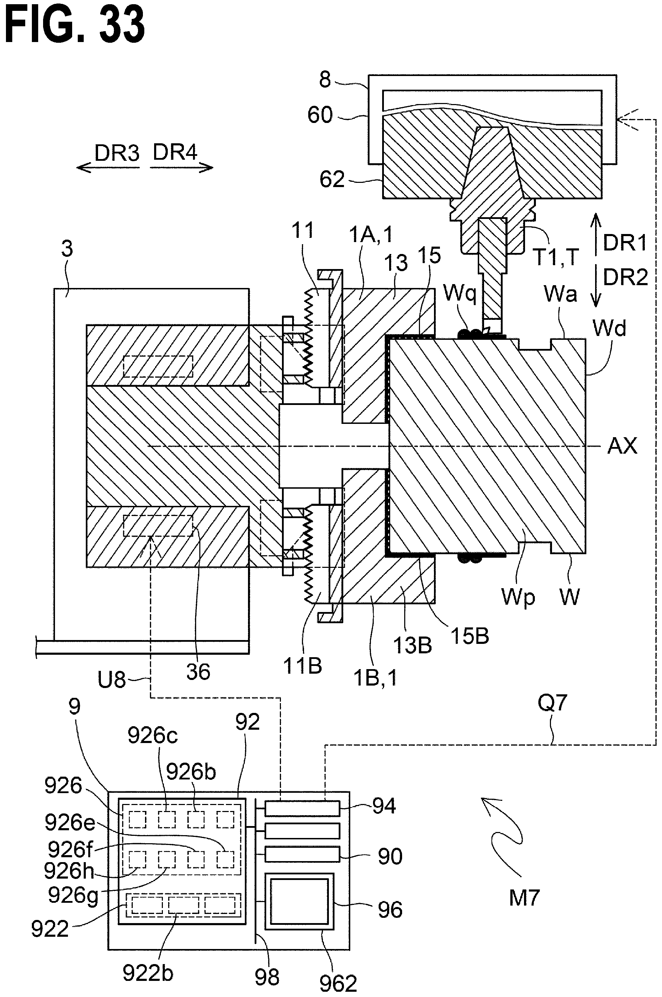

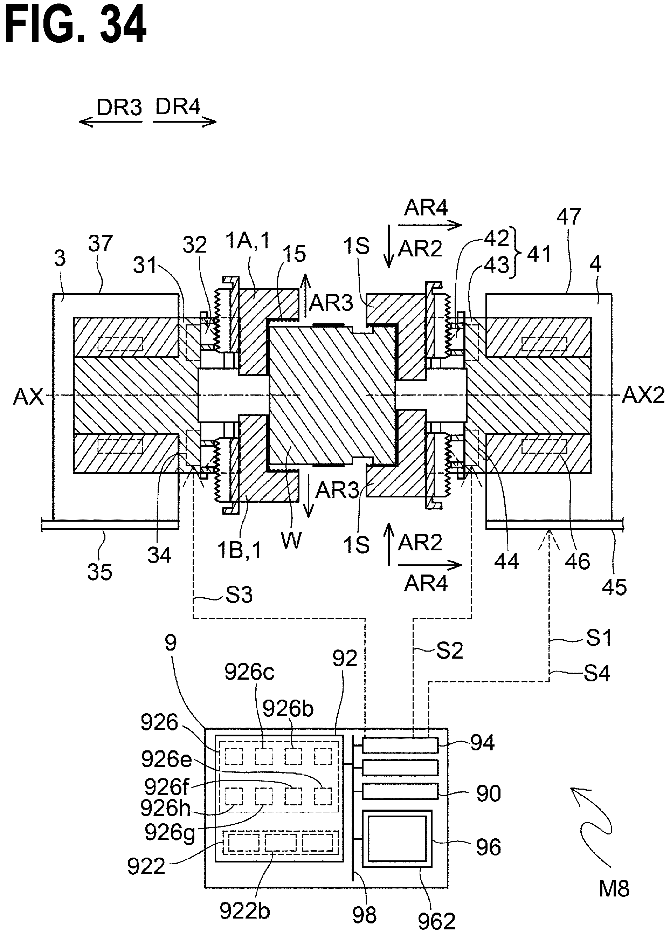

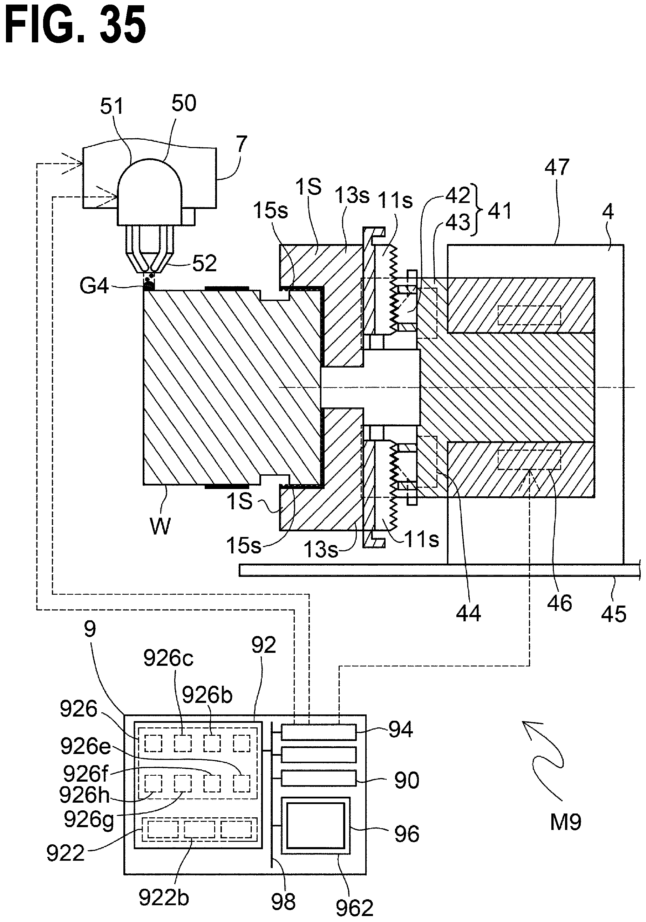

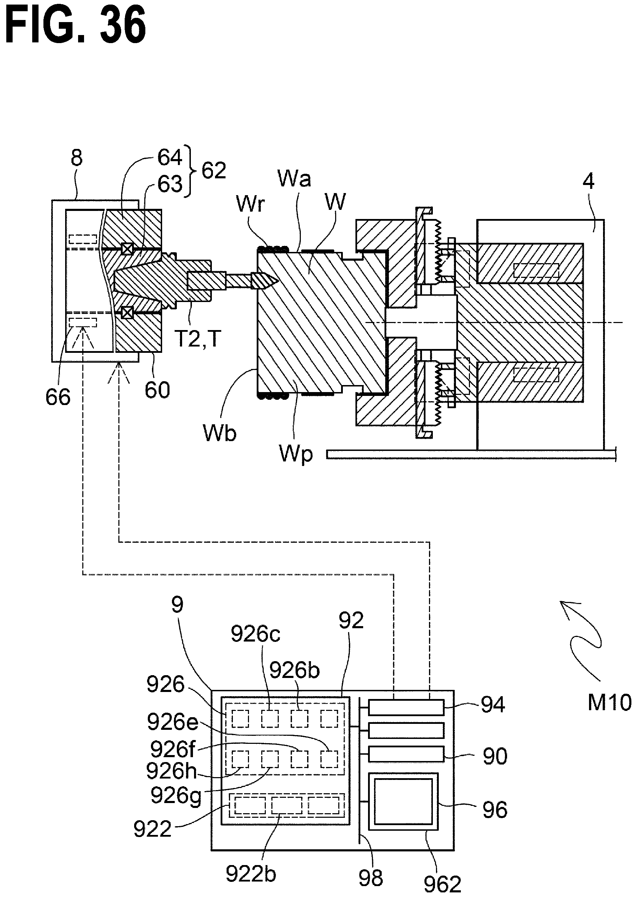

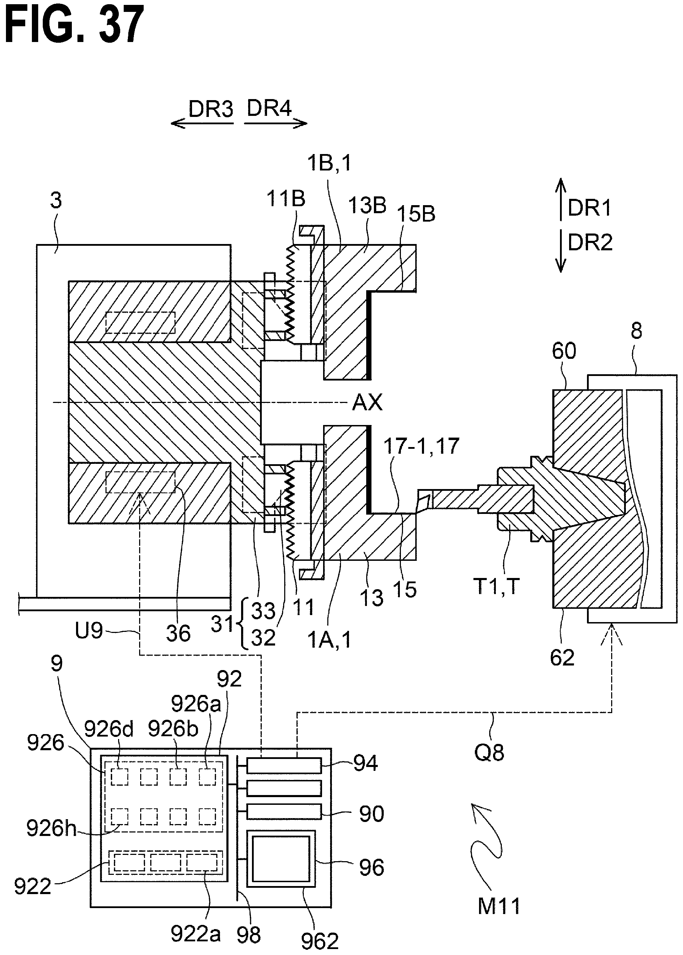

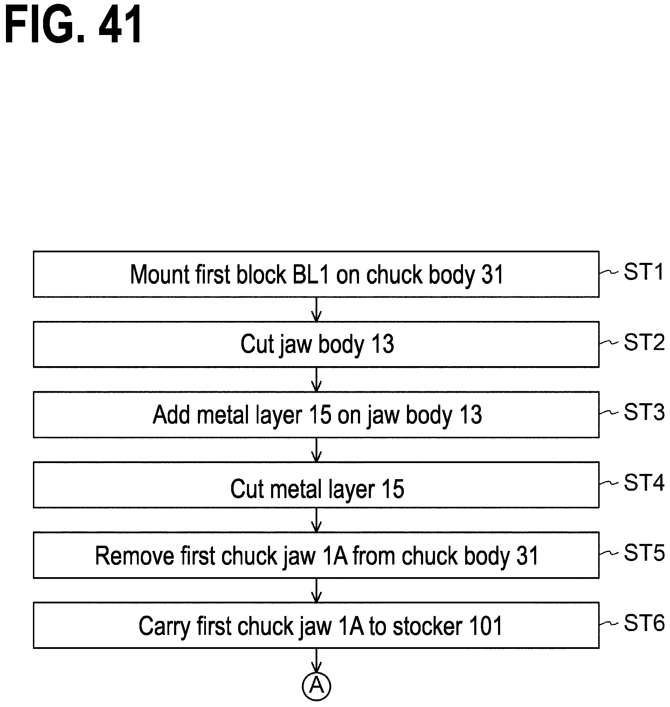

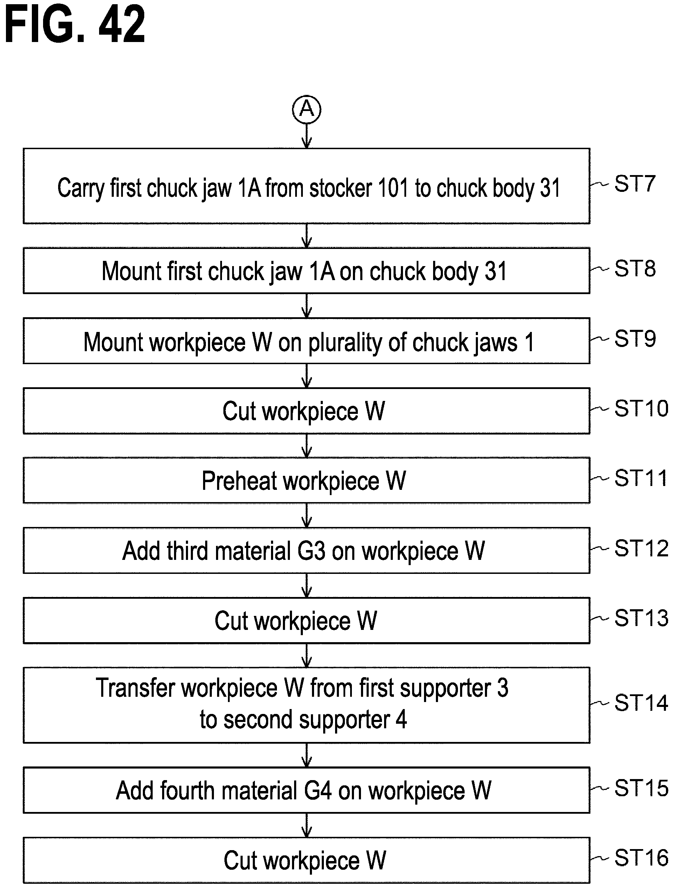

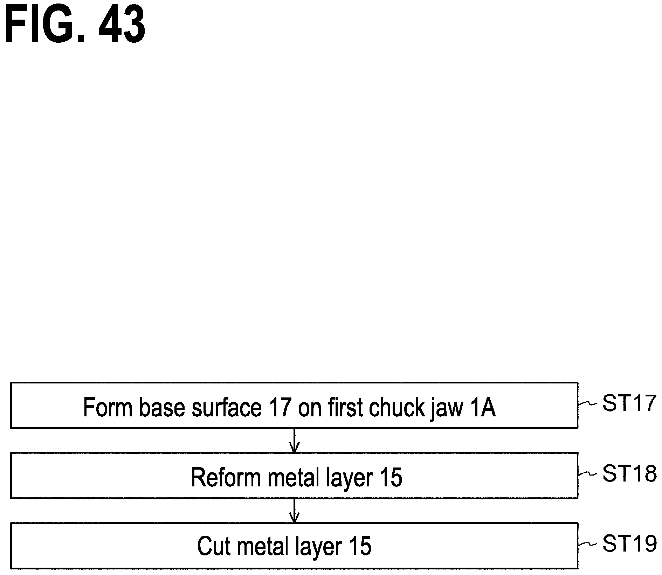

The chuck jaw 1, the method of fabricating a chuck jaw, the method of machining a workpiece, the method of repairing a chuck jaw according to the first embodiment will be described with reference to FIGs. 1 to 43. FIGs. 1 and 2 are cross-sectional diagrams schematically illustrating a state in which the chuck jaw 1 according to the first embodiment is mounted on the chuck body 31. FIG. 3 is a cross-sectional diagram schematically illustrating a state in which a plurality of blocks including a first block BL1 and a second block BL2 are mounted on the chuck body 31. FIG. 4 is a cross-sectional diagram schematically illustrating how a jaw body 13 is cut. FIG. 5 is a cross-sectional diagram schematically illustrating how a metal layer 15 is added on the jaw body 13. FIG. 6 is a cross-sectional diagram schematically illustrating how material is added on a workpiece W in a comparative example. FIG. 7 is a diagram as viewed in a direction of the first axis AX, illustrating how the workpiece W is gripped by a plurality of chuck jaws 1. FIG. 8 is a cross-sectional view taken in a direction of arrows A-A in FIG. 7. FIG. 9 is a cross-sectional diagram schematically illustrating how the plurality of chuck jaws 1 are capable of gripping a plurality of kinds of workpieces W and W2. FIG. 10 is a cross-sectional diagram schematically illustrating the chuck jaw 1 according to the first embodiment. FIG. 11 is a cross-sectional diagram schematically illustrating the chuck jaw 1 according to a first modification of the first embodiment. FIG. 12 is a perspective diagram schematically illustrating a state in which the workpiece W is gripped by the plurality of chuck jaws 1. Note that in FIG. 12, the workpiece W is illustrated by a broken line. Additionally, in FIG. 12, to facilitate grasping the shapes of the plurality of chuck jaws 1, parts of the plurality of chuck jaws 1 hidden behind the workpiece W are also illustrated. FIG. 13 is a cross-sectional diagram schematically illustrating the chuck jaw 1 according to a second modification of the first embodiment. FIG. 14 is a cross-sectional diagram schematically illustrating the chuck jaw 1 according to a third modification of the first embodiment. FIG. 15 is a cross-sectional diagram schematically illustrating the chuck jaw 1 according to a fourth modification of the first embodiment. FIGs. 16 and 17 are cross-sectional diagrams schematically illustrating how the first block BL1 is mounted on the chuck body 31. FIG. 18 is a cross-sectional diagram schematically illustrating how the jaw body 13 is cut. FIGs. 19 and 20 are cross-sectional diagrams schematically illustrating how the metal layer 15 is added on the jaw body 13. FIGs. 21 and 22 are cross-sectional diagrams schematically illustrating how the metal layer 15 is cut. FIG. 23 is a cross-sectional diagram schematically illustrating how grooves 161 are formed on a surface of the metal layer 15. FIGs. 24 and 25 are cross-sectional diagrams schematically illustrating how a first chuck jaw 1A is removed from the chuck body 31. FIG. 26 is a diagram schematically illustrating how the first chuck jaw 1A is carried to a stocker 101. FIG. 27 is a diagram schematically illustrating how the first chuck jaw 1A is carried from the stocker 101. FIG. 28 is a cross-sectional diagram schematically illustrating how the first chuck jaw 1A is mounted on the chuck body 31. FIG. 29 is a cross-sectional diagram schematically illustrating how the workpiece W is mounted on the plurality of chuck jaws 1. FIG. 30 is a cross-sectional diagram schematically illustrating how the workpiece W is cut. FIG. 31 is a cross-sectional diagram schematically illustrating how the workpiece W is preheated. FIG. 32 is a cross-sectional diagram schematically illustrating how a third material G3 is added on the workpiece W. FIG. 33 is a cross-sectional diagram schematically illustrating how the workpiece W is cut. FIG. 34 is a cross-sectional diagram schematically illustrating how the workpiece W is transferred from a first supporter 3 to a second supporter 4. FIG. 35 is a cross-sectional diagram schematically illustrating how a fourth material G4 is added on the workpiece W. FIG. 36 is a cross-sectional diagram schematically illustrating how the workpiece W is cut. FIGs. 37 to 40 are cross-sectional diagrams schematically illustrating how a step of the method of repairing the chuck jaw is executed. FIG. 41 is a flowchart illustrating an example of the method of fabricating the chuck jaw according to the first embodiment. FIG. 42 is a flowchart illustrating an example of the method of machining the workpiece according to the first embodiment. FIG. 43 is a flowchart illustrating an example of the method of repairing the chuck jaw according to the first embodiment.

As illustrated in FIG. 1, the chuck jaw 1 according to the first embodiment is a member supported by the chuck body 31. More specifically, the chuck jaw 1 is supported by the chuck body 31 to be movable in the first direction DR1 separating from the first axis AX (in other words, the rotation axis of the chuck body 31) and the second direction DR2 approaching the rotation axis. In the example illustrated in FIG. 1, the first direction DR1 corresponds to a radial direction separating from the rotation axis of the chuck body 31. The second direction DR2 is a direction opposite to the first direction DR1.

In the example illustrated in FIG. 1, the chuck body 31 supports the plurality of chuck jaws 1. In the following description, a description is given of the first chuck jaw 1A representing the plurality of chuck jaws 1.

In the examples illustrated in FIGs. 1 and 2, the chuck body 31 includes a movable portion 32 and a foot portion 33. The foot portion 33 movably supports the movable portion 32. The first chuck jaw 1A, together with the movable portion 32 of the chuck body 31, is movable in the first direction DR1 separating from the first axis AX (in other words, the rotation axis of the chuck body 31). The first chuck jaw 1A, together with the movable portion 32 of the chuck body 31, is movable in the second direction DR2 approaching the first axis AX.

As illustrated in FIG. 2, the first chuck jaw 1A includes a foot portion 11 to be mounted on the chuck body 31, the jaw body 13, and the metal layer 15.

The metal layer 15 is added on the jaw body 13 and comes into contact with the workpiece W. A first metal material included in the metal layer 15 has a thermal conductivity lower than that of a second metal material included in the jaw body 13. The metal layer 15 is, for example, a layer formed by solidification of metal molten material on the jaw body 13.

Next, a method of fabricating the first chuck jaw 1A according to the first embodiment will be described.

As illustrated in FIG. 3, at a first step ST1, the first block BL1 is mounted on the chuck body 31 rotatable about the first axis AX. The first block BL1 includes the foot portion 11 and the jaw body 13. The first step ST1 is a first mounting step. Note that, in the first block BL1, the foot portion 11 and the jaw body 13 may be integrally formed. Alternatively, the foot portion 11 may be secured to the jaw body 13 via a securing member.

The first mounting step (the first step ST1) includes mounting the foot portion 11 of the first block BL1 on the chuck body 31 (more specifically, the movable portion 32 of the chuck body 31).

As illustrated in FIG. 4, at a second step ST2, the jaw body 13 is cut. The second step ST2 is a first cutting step. The first cutting step (the second step ST2) includes cutting the jaw body 13 to form a base surface 130 on the jaw body 13 with the foot portion 11 of the first block BL1 being mounted on the chuck body 31.

Note that, when the base surface 130 is previously formed on the jaw body 13 before the first block BL1 is mounted on the chuck body 31, the second step ST2 is omitted.

As illustrated in FIG. 5, at a third step ST3, the metal layer 15 is added on the jaw body 13. The third step ST3 is a first adding step. The first adding step (the third step ST3) includes adding the metal layer 15 on the jaw body 13 with the foot portion 11 being mounted on the chuck body 31. The metal layer 15 is to come into contact with the workpiece W.

A first metal material G1 included in the metal layer 15 has a thermal conductivity lower than that of a second metal material included in the jaw body 13.

As illustrated in FIG. 6, assume a case in which additive manufacturing is performed on a preheated workpiece W that is held by chuck jaws 1' according to a comparative example. In the example illustrated in FIG. 6, the workpiece W dissipates heat to the chuck jaws 1' during additive manufacturing, resulting in a decrease in the temperature of the workpiece W. When the temperature of the workpiece W is decreased, a defect occurs in adding material on the workpiece W (more specifically, breakage of material added on the workpiece W occurs).

In contrast, with the chuck jaw 1 according to the first embodiment, the metal layer 15 having low thermal conductivity is added on the jaw body 13. In the method of fabricating the chuck jaw according to the first embodiment, the metal layer 15 having low thermal conductivity is added on the jaw body 13.

In the first embodiment, when the workpiece W is gripped by the plurality of chuck jaws 1 including the first chuck jaw 1A, the metal layer 15 having low thermal conductivity comes into contact with the workpiece W. This reduces heat dissipation from the workpiece W to the first chuck jaw 1A and thus reduces a decrease in the temperature of the workpiece W during additive manufacturing of adding material on the workpiece W (refer to FIG. 2). Thus, a defect in adding material on the workpiece W (more specifically, breakage of material added on the workpiece W) is prevented or reduced.

In the chuck jaw 1 according to the first embodiment, the metal layer 15 is added on the jaw body 13 without using a securing member. In this case, there is no need to prepare the securing member for securing the metal layer 15 to the jaw body 13. A technique of reducing heat conduction from the workpiece W to the first chuck jaw 1A is therefore provided at low cost.

Assume a case in which a first member having low thermal conductivity is secured to the jaw body 13 via the securing member. In this case, the shape of the jaw body 13 cannot be changed flexibly in accordance with the shape of the workpiece W. For example, when the shape of the jaw body 13 is changed in accordance with the shape of the workpiece W, the shape of the first member may possibly be no longer in conformance with the shape of the jaw body 13.

In contrast, in the method of fabricating the chuck jaw according to the first embodiment, the shape of the jaw body 13 is flexibly changeable in accordance with the shape of the workpiece W that is to be gripped. Additionally, the position at which the metal layer 15 is to be provided, the range in which the metal layer 15 is to be provided, the thickness of the metal layer 15, and the like are easily set in accordance with the shape of the workpiece W.

### (Optional Structures)

Next, optional structures adoptable to the first chuck jaw 1A, the method of fabricating the chuck jaw, the method of machining the workpiece, and the method of repairing the chuck jaw according to the first embodiment will be described with reference to FIGs. 1 to 43.

### (First Metal Material Included in Metal Layer 15 and Second Metal Material Included in Jaw Body 13)

The jaw body 13 includes, for example, steel (more specifically, medium-carbon steel). In other words, the second metal material included in the jaw body 13 includes, for example, steel (more specifically, medium-carbon steel). Note that, as used herein, the medium-carbon steel means carbon steel having a carbon content of equal to or greater than 0.25% by weight and equal to or less than 0.6% by weight. Note that, the second metal material included in the jaw body 13 is not limited to medium-carbon steel or steel, and any material may be used.

The metal layer 15 includes, for example, stainless steel. Alternatively, the metal layer 15 may include a nickel alloy including nickel as a main component (for example, a nickel chromium alloy including nickel as a main component and a chromium as a second component). Further alternatively, the metal layer 15 may include a cobalt alloy including cobalt as a main component (for example, a cobalt chromium alloy including cobalt as a main component and chromium as a second component). Further alternatively, the metal layer 15 may include, for example, mold steel having low thermal conductivity or high-speed steel having low thermal conductivity. In other words, the first metal material included in the metal layer 15 includes, for example, stainless steel, a nickel alloy (more specifically, a nickel chromium alloy), a cobalt alloy (more specifically, a cobalt chromium alloy), mold steel having low thermal conductivity, or high-speed steel having low thermal conductivity. Note that, the first metal material included in the metal layer 15 is not limited to the examples described above.

The thermal conductivity of the first metal material included in the metal layer 15 is lower than the thermal conductivity of the second metal material included in the jaw body 13 by, for example, 0.5 times or less, and more preferably by 0.4 times or less, and further preferably by 0.3 time or less. To facilitate comparison between the thermal conductivity of the first metal material included in the metal layer 15 and the thermal conductivity of the second metal material included in the jaw body 13, the "thermal conductivity" as used herein means the thermal conductivity at ambient temperature.

The entire part of the first chuck jaw 1A according to the first embodiment that is to come into contact with the workpiece W is preferably configured by the metal layer 15. In this case, the jaw body 13 having relatively high thermal conductivity does not come into contact with the workpiece W. This effectively reduces heat conduction from the workpiece W to the first chuck jaw 1A, and effectively reduces a decrease in the temperature of the workpiece W.

In the example illustrated in FIG. 8, the metal layer 15 includes a first portion 15a and a second portion 15b. The first portion 15a comes into contact with an outer circumferential surface Wa of the workpiece W. The second portion 15b comes into contact with an end face of the workpiece W (more specifically, an end face of the workpiece W facing the third direction DR3). In this case, heat dissipation from the outer circumferential surface Wa of the workpiece W to the first chuck jaw 1A is reduced, and heat dissipation from the end face of the workpiece W to the first chuck jaw 1A is also reduced. This effectively reduces a decrease in the temperature of the workpiece W in a case in which the outer circumferential surface Wa of the workpiece W is gripped by the plurality of chuck jaws 1 including the first chuck jaw 1A. Note that, as used herein, the end face of the workpiece W facing the third direction DR3 is referred to as a "first end face Wb", and an end face of the workpiece W facing the fourth direction DR4 is referred to as a "second end face Wd".

Alternatively, in the first chuck jaw 1A, the first portion 15a that comes into contact with the outer circumferential surface Wa of the workpiece W may be configured by the metal layer 15 including the first metal material, and the second portion 15b that comes into contact with the first end face Wb of the workpiece W may be configured by the jaw body 13 including the second metal material. Further alternatively, in the first chuck jaw 1A, the first portion 15a that comes into contact with the outer circumferential surface Wa of the workpiece W may be configured by the jaw body 13 including the second metal material, and the second portion 15b that comes into contact with the first end face Wb of the workpiece W may be configured by the metal layer 15 including the first metal material. In these cases also, a decrease in the temperature of the workpiece W is reduced as compared with a case in which the metal layer 15 is not added at all.

In the example illustrated in FIG. 2, the metal layer 15 includes a third portion 15c and the second portion 15b. The third portion 15c comes into contact with an inner circumferential surface Wc of the workpiece W. The second portion 15b comes into contact with the first end face Wb of the workpiece W. In this case, heat dissipation from the inner circumferential surface Wc of the workpiece W to the first chuck jaw 1A is reduced, and heat dissipation from the first end face Wb of the workpiece W to the first chuck jaw 1A is also reduced. This effectively reduces a decrease in the temperature of the workpiece W in a case in which the inner circumferential surface Wc of the workpiece W is gripped by the plurality of chuck jaws 1 including the first chuck jaw 1A.

Alternatively, in the first chuck jaw 1A, the third portion 15c that comes into contact with the inner circumferential surface Wc of the workpiece W may be configured by the metal layer 15 including the first metal material, and the second portion 15b that comes into contact with the first end face Wb of the workpiece W may be configured by the jaw body 13 including the second metal material. Further alternatively, in the first chuck jaw 1A, the third portion 15c that comes into contact with the inner circumferential surface Wc of the workpiece W may be configured by the jaw body 13 including the second metal material, and the second portion 15b that comes into contact with the first end face Wb of the workpiece W may be configured by the metal layer 15 including the first metal material. In these cases also, a decrease in the temperature of the workpiece W is reduced as compared with a case in which the metal layer 15 is not added at all.

As illustrated in FIG. 9, the metal layer 15 may include the first portion 15a that comes into contact with the outer circumferential surface Wa of the workpiece W, the second portion 15b that comes into contact with the first end face Wb of the workpiece W, and the third portion 15c that comes into contact with an inner circumferential surface of another workpiece W2. In this case, the first chuck jaw 1A is usable for gripping a plurality of kinds of workpieces.

As illustrated in FIGs. 10 and 11, the metal layer 15 may be an additive manufacturing layer 151. In other words, the metal layer 15 may be a layer added on the jaw body 13 by additive manufacturing. When the metal layer 15 is the additive manufacturing layer 151, the thickness of the metal layer 15 is easily increased. When the metal layer 15 has a sufficient thickness, the heat conduction from the workpiece W to the chuck jaw 1 is effectively reduced. Additionally, when the metal layer 15 has a sufficient thickness, the grooves 161 (refer to FIG. 13) are easily formed on a surface 16 of the metal layer 15.

The thickness of the metal layer 15 is, for example, greater than or equal to 0.5 mm and less than or equal to 5 mm. More specifically, in the example illustrated in FIG. 10, a thickness H1 of the first portion 15a of the metal layer 15 and a thickness H2 of the second portion 15b of the metal layer 15 are each greater than or equal to 0.5 mm and less than or equal to 5 mm. In the example illustrated in FIG. 11, the thickness H2 of the second portion 15b of the metal layer 15 and a thickness H3 of the third portion 15c of the metal layer 15 are each greater than or equal to 0.5 mm and less than or equal to 5 mm. In the example illustrated in FIG. 10, the thickness H2 of the second portion 15b may be greater than the thickness H1 of the first portion 15a, may be less than the thickness H1 of the first portion 15a, or may be equal to the thickness H1 of the first portion 15a. In the example illustrated in FIG. 11, the thickness H2 of the second portion 15b may be greater than the thickness H3 of the third portion 15c, may be less than the thickness H3 of the third portion 15c, or may be equal to the thickness H3 of the third portion 15c. Note that, the thickness of the metal layer 15 is not limited to the examples described above.

When the metal layer 15 is the additive manufacturing layer 151, the metal layer 15 is easily reproduced. For example, when the metal layer 15 wears out due to use of the chuck jaw 1, the metal layer 15 is reproduced by adding the metal layer 15 again.

When the metal layer 15 is the additive manufacturing layer 151, the metal layer 15 is easily added on only the surface of the first chuck jaw 1A that is to come into contact with the workpiece W. For example, in the example illustrated in FIG. 10, out of a plurality of surfaces of the first chuck jaw 1A, a first surface 16-1 that is to come into contact with the outer circumferential surface Wa of the workpiece W and a second surface 16-2 that is to come into contact with the first end face Wb of the workpiece W are configured by the metal layer 15. In the example illustrated in FIG. 11, out of a plurality of surfaces of the chuck jaw 1, a third surface 16-3 that is to come into contact with the inner circumferential surface Wc of the workpiece W and the second surface 16-2 that is to come into contact with the first end face Wb of the workpiece W are configured by the metal layer 15. Omitting the addition of the metal layer 15 to the surface, of the chuck jaw 1, that does not come into contact with the workpiece W reduces an increase in machining cost involved in adding the metal layer 15 and an increase in machining time involved in adding the metal layer 15.

When the metal layer 15 is the additive manufacturing layer 151, the additive manufacturing apparatus 50 that performs additive manufacturing on the workpiece W may be used to add the metal layer 15 on the jaw body 13 of the first chuck jaw 1A that holds the workpiece W. In other words, both the machining of the first chuck jaw 1A and the machining of the workpiece W may be performed using one additive manufacturing apparatus 50.

In the example illustrated in FIG. 12, the first surface 16-1 of the metal layer 15 that comes into contact with the outer circumferential surface Wa of the workpiece W is an arc-shaped surface. The arc-shaped surface preferably has a curvature radius substantially equal to the radius of the outer circumferential surface Wa of the workpiece W. In a state in which the chuck jaw 1 is mounted on the chuck body 31, it is preferable that a center line of the arc-shaped surface be substantially coaxial with the first axis AX. Alternatively, the first surface 16-1 that comes into contact with the outer circumferential surface Wa of the workpiece W may be a flat surface. In the example illustrated in FIG. 12, the first surface 16-1 is a surface that extends in a direction parallel to the first axis AX.

In the example illustrated in FIG. 12, the second surface 16-2 of the metal layer 15 that comes into contact with the first end face Wb of the workpiece W is a flat surface. In the example illustrated in FIG. 12, the second surface 16-2 is a surface perpendicular to the first axis AX.

In the metal layer 15, the third surface 16-3 (refer to FIG. 11) that comes into contact with the inner circumferential surface Wc of the workpiece W may be an arc-shaped surface or a flat surface. When the third surface 16-3 is an arc-shaped surface, the arc-shaped surface preferably has a curvature radius substantially equal to the radius of the inner circumferential surface Wc of the workpiece W. The third surface 16-3 is a surface that extends in a direction parallel to the rotation axis (in other words, the first axis AX) of the chuck body 31.

In the example illustrated in FIG. 11, the second surface 16-2 that comes into contact with the first end face Wb of the workpiece W is a flat surface. In the example illustrated in FIG. 11, the second surface 16-2 is a surface perpendicular to the rotation axis (in other words, the first axis AX) of the chuck body 31.

In the example illustrated in FIG. 10, the surface 16 of the metal layer 15 (more specifically, the first surface 16-1 and the second surface 16-2) is a cut surface 16s (in other words, a surface formed by cutting). In the example illustrated in FIG. 11, the surface 16 of the metal layer 15 (more specifically, the third surface 16-3 and the second surface 16-2) is the cut surface 16s (in other words, a surface formed by cutting).

When the surface 16 of the metal layer 15 is formed by cutting, the surface 16 is made smooth. In this case, the workpiece W that comes into contact with the metal layer 15 is prevented from being damaged by the metal layer 15. Note that, after the cutting, grinding is sometimes performed. As used herein, a surface formed by grinding after the cutting is regarded as one mode of the cut surface 16s.

In the examples illustrated in FIGs. 10 and 11, the surface 16 of the metal layer 15 (more specifically, the first surface 16-1 and the second surface 16-2 or the third surface 16-3 and the second surface 16-2) is a smooth surface without grooves or protrusions.

Alternatively, as illustrated in FIGs. 13 and 14, the surface 16 of the metal layer 15 may be a smooth surface including the grooves 161. More specifically, the first surface 16-1 of the metal layer 15 may be a smooth surface including grooves 161-1. The second surface 16-2 of the metal layer 15 may be a smooth surface including grooves 161-2. The third surface 16-3 of the metal layer 15 may be a smooth surface including grooves 161-3. Note that, the phrase "the smooth surface including grooves" means that the grooves are formed on the smooth surface. Thus, in the smooth surface including the grooves, parts other than the grooves are smooth.

When the surface 16 of the metal layer 15 includes the grooves 161, the contact area between the metal layer 15 and the workpiece W is reduced. This further reduces the heat dissipation from the workpiece W to the first chuck jaw 1A.

In the examples illustrated in FIGs. 8 to 14, part of the surface of the jaw body 13 of the first chuck jaw 1A is covered by the first metal material forming the metal layer 15. At other part of the surface of the jaw body 13 of the first chuck jaw 1A, the second metal material forming the jaw body 13 is exposed without being covered by the first metal material. In a case in which the part of the surface of the jaw body 13 that comes into contact with the workpiece W is covered by the first metal material, and the part of the surface of the jaw body 13 that does not come into contact with the workpiece W is exposed as it is, the amount of the first metal material to be added on the jaw body 13 is reduced. Additionally, the time required to add the first metal material on the jaw body 13 is kept short.

### (Foot portion 11 of First Chuck Jaw 1A)

In the examples illustrated in FIGs. 2 and 8, the first chuck jaw 1A includes the foot portion 11 to be mounted on the chuck body 31. The foot portion 11 may include a first engaging portion 112 to be engaged with an engaging portion 312 formed on the chuck body 31. In the examples illustrated in FIGs. 2 and 8, the mounting position of the first chuck jaw 1A relative to the movable portion 32 of the chuck body 31 is adjustable by adjusting the position of the first engaging portion 112 relative to the engaging portion 312.

### (Held Portion 12)

The first chuck jaw 1A may include a held portion 12 to be held by a jaw exchanger. The held portion 12 is provided on the foot portion 11 or the jaw body 13. In the example illustrated in FIG. 15, the held portion 12 is provided on the foot portion 11. In the example illustrated in FIG. 15, the held portion 12 includes a second engaging portion 122 engageable with the jaw exchanger. As illustrated in FIG. 17, in a state in which the first chuck jaw 1A is mounted on the chuck body 31, the held portion 12 (more specifically, the second engaging portion 122) is preferably configured to be exposed to the outside of the chuck body 31. In this case, it is easy for a jaw exchanger 102 to approach the held portion 12.

### (Base Surface 130 of Jaw Body 13)

The jaw body 13 includes the base surface 130 on which the metal layer 15 is to be added. In the example illustrated in FIG. 4, the base surface 130 is the cut surface. When the base surface 130 is the cut surface, impurities are removed from the base surface 130, and the base surface 130 becomes a smooth surface.

### (Method of Fabricating Chuck Jaw)

The chuck jaw formed by the method of fabricating the chuck jaw according to the first embodiment may be the first chuck jaw 1A illustrated in any of FIGs. 1 to 15, or may be other chuck jaws.

As illustrated in FIGs. 16 and 17, at the first step ST1, the first block BL1, which includes the foot portion 11 and the jaw body 13, is mounted on the chuck body 31 (more specifically, the movable portion 32 of the chuck body 31) that is rotatable about the first axis AX. The first step ST1 is a first mounting step. Note that, in the first block BL1, the foot portion 11 and the jaw body 13 may be integrally formed. Alternatively, the foot portion 11 may be secured to the jaw body 13 via a securing member.

In the first block BL1, the external shape of the jaw body 13 may be a substantially rectangular parallelepiped. In this case, there is a greater freedom of the shape of the chuck jaw 1 to be fabricated. In other words, the jaw body 13 having any shape is formable by cutting the jaw body 13 that is shaped in a substantially rectangular parallelepiped. In the example illustrated in FIG. 16, the first block BL1 is a new block.

Alternatively, in the first block BL1, the jaw body 13 may have an external shape that resembles the external shape of the jaw body to be finally formed. In this case, the volume of parts to be removed from the first block BL1 is reduced, and thus the time required to cut the jaw body 13 is kept short. The first block BL1 may be a new block or may be a used block. For example, the first block BL1 may be a used chuck jaw.

In the example illustrated in FIG. 16, the foot portion 11 of the first block BL1 includes the first engaging portion 112, which is to be engaged with the chuck body 31. The first block BL1 includes the held portion 12 to be held by the jaw exchanger 102. The held portion 12 may include the second engaging portion 122 engageable with the jaw exchanger 102.

In the examples illustrated in FIGs. 16 and 17, the first mounting step includes the chuck exchanger 102 carrying the first block BL1 to the chuck body 31 and the jaw exchanger 102 mounting the first block BL1 on the chuck body 31. In this case, mounting of the first block BL1 on the chuck body 31 is automatically performed using the jaw exchanger 102.

Alternatively, the first mounting step may be performed manually. In this case, the held portion 12 (more specifically, the second engaging portion 122) may be omitted.

As illustrated in FIG. 18, at the second step ST2, the jaw body 13 is cut. The second step ST2 is the first cutting step. The first cutting step includes cutting the jaw body 13 so that the base surface 130 is formed on the chuck body 13 with the foot portion 11 of the first block BL1 being mounted on the chuck body 31 (more specifically, the movable portion 32 of the chuck body 31). The first cutting step (the second step ST2) includes cutting the first block BL1 to form the base surface 130 shaped generally in conformance with part of the surface of the workpiece W.

In the example illustrated in FIG. 18, the first cutting step (the second step ST2) includes cutting the jaw body 13 to form a first base surface 131 extending in a direction parallel to the first axis AX (in other words, the rotation axis of the chuck body 31) and a second base surface 132 perpendicular to the first axis AX.

In the example illustrated in FIG. 18, the first cutting step (the second step ST2) includes forming the first base surface 131 and/or the second base surface 132 on the jaw body 13 by cutting the jaw body 13 with a cutting tool T.

In the example illustrated in FIG. 18, the first cutting step (the second step ST2) may include forming the first base surface 131 and/or the second base surface 132 on the jaw body 13 by lathe turning. More specifically, the first cutting step (the second step ST2) may include bringing the cutting tool T into contact with the jaw body 13 repeatedly with the chuck body 13, on which the foot portion 11 is mounted, rotating about the first axis AX (refer to arrow R1).

Note that, when the base surface 130 is previously formed on the jaw body 13 before the first block BL1 is mounted on the chuck body 31, the second step ST2 is omitted.

As illustrated in FIG. 19, at the third step ST3, the metal layer 15 is added on the jaw body 13. The third step ST3 is the first adding step.

The first adding step (the third step ST3) includes adding the metal layer 15, which is to come into contact with the workpiece W, on the jaw body 13 with the foot portion 11 being mounted on the chuck body 31 (more specifically, the movable portion 32 of the chuck body 31). The first metal material G1 included in the metal layer 15 has a thermal conductivity lower than that of the second metal material included in the jaw body 13.

In the example illustrated in FIG. 19, the first adding step (the third step ST3) is performed using a metal applicator 5. In the example illustrated in FIG. 19, the metal applicator 5 is the additive manufacturing apparatus 50. The additive manufacturing apparatus 50 is sometimes referred to as an overlay welding device.

In the example illustrated in FIG. 19, the additive manufacturing apparatus 50 supplies the first metal material G1 (more specifically, metal powder g1 of the first metal material) toward the jaw body 13 (more specifically, the base surface 130), and also emits a laser LB toward the jaw body 13 (more specifically, the base surface 130). As a result, the first metal material heated by the energy of the laser LB is melted, and the melted metal adheres to the jaw body 13 (more specifically, the base surface 130). Thus, the first metal material adheres to the jaw body 13 (more specifically, the base surface 130), and the metal layer 15 is formed to cover the base surface 130. In the example illustrated in FIG. 19, part of the second metal material forming the base surface 130 is also melted by the laser LB. This firmly joins the second metal material forming the base surface 130 and the first metal material supplied to the base surface 130 to each other.

Alternatively, the metal applicator 5 may be a spraying device that adds the first metal material on the jaw body 13 (more specifically, the base surface 130). The spraying device adds the first metal material on the jaw body 13 (more specifically, the base surface 130) by a method such as high-velocity flame spraying, gas-flame spraying, plasma spraying, arc spraying, or cold spraying.

As illustrated in FIG. 19, the first adding step (the third step ST3) may include rotating the jaw body 13 about the first axis AX (refer to arrow R2) and adding the metal layer 15 on the jaw body 13 being rotated about the first axis AX. Because the jaw body 13 is rotated about the first axis AX, when the first adding step is executed, there is no need to change the position of the metal applicator 5, or a change in the position of the metal applicator 5 is kept small. The smaller change in the position of the metal applicator 5 improves accuracy in forming the metal layer 15.

In the examples illustrated in FIGs. 19 and 20, the first adding step (the third step ST3) includes adding the metal layer 15 on both of the first base surface 131 and the second base surface 132. More specifically, in the example illustrated in FIG. 19, the first adding step (the third step ST3) includes adding the first metal material on the second base surface 132 of the jaw body 13 using the additive manufacturing apparatus 50. The additive manufacturing apparatus 50 supplies the first metal material toward the second base surface 132 and also emits the laser LB toward the second base surface 132. As a result, the first metal material heated by the energy of the laser LB is melted, and the melted metal adheres to the second base surface 132. Thus, the metal layer 15 is formed to cover the second base surface 132.

In the example illustrated in FIG. 20, the first adding step (the third step ST3) includes adding the first metal material on the first base surface 131 of the jaw body 13 using the additive manufacturing apparatus 50. The additive manufacturing apparatus 50 supplies the first metal material toward the first base surface 131 and also emits the laser LB toward the first base surface 131. As a result, the first metal material heated by the energy of the laser LB is melted, and the melted metal adheres to the first base surface 131. Thus, the metal layer 15 is formed to cover the first base surface 131.

In the examples illustrated in FIGs. 19 and 20, after adding the first metal material on the second base surface 132, the first metal material is added on the first base surface 131. Alternatively, after adding the first metal material on the first base surface 131, the first metal material may be added on the second base surface 132.

As illustrated in FIG. 21, at a fourth step ST4, the metal layer 15 is cut. The fourth step ST4 is a second cutting step. The second cutting step (the fourth step ST4) includes cutting the metal layer 15 to smooth the surface of the metal layer 15 with the foot portion 11 being mounted on the chuck body 31 (more specifically, the movable portion 32 of the chuck body 31). The second cutting step (the fourth step ST4) includes cutting the metal layer 15 to form the cut surface 16s that is shaped in conformance with part of the surface of the workpiece W.

In the examples illustrated in FIGs. 21 and 22, the second cutting step (the fourth step ST4) includes cutting the metal layer 15 to form a first cut surface 16s-1 extending in a direction parallel to the first axis AX (in other words, the rotation axis of the chuck body 31) and a second cut surface 16s-2 perpendicular to the first axis AX on the metal layer 15.

In the examples illustrated in FIGs. 21 and 22, the second cutting step (the fourth step ST4) includes forming the first cut surface 16s-1 and/or the second cut surface 16s-2 on the metal layer 15 by cutting the metal layer 15 with the cutting tool T. Note that, the cutting tool that cuts the metal layer 15 may be the same as a tool that cuts the jaw body 13 or may be different from the cutting tool that cuts the jaw body 13.

In the examples illustrated in FIGs. 21 and 22, the second cutting step (the fourth step ST4) may include forming the first cut surface 16s-1 and/or the second cut surface 16s-2 on the metal layer 15 by lathe turning. More specifically, the second cutting step (the fourth step ST4) may include bringing the cutting tool T into contact with the metal layer 15 repeatedly with the chuck body 13, on which the foot portion 11 is mounted, rotating about the first axis AX (refer to arrow R3).

Additionally, as illustrated in FIG. 23, the second cutting step (the fourth step ST4) may include forming the grooves 161 on the surface of the metal layer 15. For example, the second cutting step (the fourth step ST4) may include forming the grooves 161-1 on the first surface 16-1 of the metal layer 15 by bringing a tool such as a groove-forming tool T3 into contact with the metal layer 15 rotating about the first axis AX (refer to arrow R4). Additionally, the second cutting step (the fourth step ST4) may include forming the grooves 161-2 on the second surface 16-2 of the metal layer 15 by bringing a tool such as the groove-forming tool T3 into contact with the metal layer 15 rotating about the first axis AX. Note that, the step of forming the grooves 161 on the surface 16 of the metal layer 15 may be omitted.

The chuck jaw 1 (for example, the first chuck jaw 1A) is formed by the plurality of steps described above.

The method of fabricating the chuck jaw may include a removing step (a fifth step ST 5). The removing step is a step of removing the first chuck jaw 1A that has been formed (in other words, the first chuck jaw 1A including the foot portion 11, the jaw body 13, and the metal layer 15 added on the jaw body 13) from the chuck body 31.

In the example illustrated in FIG. 24, the removing step includes the jaw exchanger 102 operating an operation portion 39 so that the chuck body 31 and the first engaging portion 112 of the foot portion 11 are disengaged from each other. In the example illustrated in FIG. 24, the engaging portion 312 of the chuck body 31 and the first engaging portion 112 of the foot portion 11 are disengaged from each other by the jaw exchanger 102 pressing the operation portion 39 provided on the chuck body 31.

In the example illustrated in FIG. 25, the removing step includes the jaw exchanger 102 pulling out the first chuck jaw 1A in a direction separating from the first axis AX.

In the examples illustrated in FIGs. 24 and 25, the removing step is automatically performed using the jaw exchanger 102. Alternatively, the removing step may be performed manually.

The method of fabricating the chuck jaw may include a first carrying step (a sixth step ST6). The first carrying step includes carrying the first chuck jaw 1A removed from the chuck body 31 to the stocker 101.

In the example illustrated in FIG. 26, the carrying step includes the jaw exchanger 102 carrying the first chuck jaw 1A to the stocker 101. The jaw exchanger 102 may include a first unit 102a and a second unit 102b. The first unit 102a removes the first chuck jaw 1A from the chuck body 31. The second unit 102b carries the first chuck jaw 1A to the stocker 101.

The first chuck jaw 1A carried to the stocker 101 may be held by a jaw holder 101a.

In the example illustrated in FIG. 26, the first carrying step is automatically performed using the jaw exchanger 102. Alternatively, the first carrying step may be performed manually.

### (Second Chuck Jaw 1B and Third Chuck Jaw 1C)

A second chuck jaw 1B has a configuration similar to that of the first chuck jaw 1A. The description of the first chuck jaw 1A described above is deemed to be the description of the second chuck jaw 1B by replacing the terms "first chuck jaw 1A", "foot portion 11", "jaw body 13", and "metal layer 15" in the description of the first chuck jaw 1A described above with "second chuck jaw 1B", "second foot portion 11B", "second jaw body 13B", and "second metal layer 15B", respectively, and repetitive descriptions of the second chuck jaw 1B are omitted.

A third chuck jaw 1C has a configuration similar to that of the first chuck jaw 1A. The description of the first chuck jaw 1A described above is deemed to be the description of the third chuck jaw 1C by replacing the terms "first chuck jaw 1A", "foot portion 11", "jaw body 13", and "metal layer 15" in the description of the first chuck jaw 1A described above with terms "third chuck jaw 1C", "third foot portion 11C", "third jaw body 13C", and "third metal layer 15C", respectively, and repetitive descriptions of the third chuck jaw 1C are omitted.

### (Method of Fabricating Second Chuck Jaw 1B and Method of Fabricating Third Chuck Jaw 1C)

A method of fabricating the second chuck jaw 1B includes a step similar to that of the method of fabricating the first chuck jaw 1A. The description of the method of fabricating the first chuck jaw 1A described above is deemed to be the description of the method of fabricating the second chuck jaw 1B by replacing the terms "first chuck jaw 1A", "foot portion 11", "jaw body 13", "metal layer 15", and "first block BL1" in the description of the method of fabricating the first chuck jaw 1A described above with terms "second chuck jaw 1B", "second foot portion 11B", "second jaw body 13B", "second metal layer 15B", and "second block BL2", respectively, and repetitive descriptions of the method of fabricating the second chuck jaw 1B are omitted.

A method of fabricating the third chuck jaw 1C includes a step similar to that of the method of fabricating first chuck jaw 1A. The description of the method of fabricating the first chuck jaw 1A described above is deemed to be the description of the method of fabricating the third chuck jaw 1C by replacing the terms "first chuck jaw 1A", "foot portion 11", "jaw body 13", "metal layer 1", and "first block BL1" in the description of the method of fabricating the first chuck jaw 1A described above with terms "third chuck jaw 1C", "third foot portion 11C", "third jaw body 13C", "third metal layer 15C", and "third block", respectively, and repetitive descriptions of the method of fabricating the third chuck jaw 1C are omitted.

### (Fabrication of Plurality of Chuck Jaws 1)

The method of fabricating the chuck jaw according to the first embodiment may include fabricating a plurality of chuck jaws including the first chuck jaw 1A and the second chuck jaw 1B.

As illustrated in FIG. 16, the method of fabricating the chuck jaw according to the first embodiment may include mounting, on the chuck body 31 rotatable about the first axis AX, the foot portion 11 of the first block BL1, which includes the foot portion 11 and the jaw body 13, and mounting, on the chuck body 31, the second foot portion 11B of the second block BL2, which includes the second foot portion 11B and the second jaw body 13B.

As illustrated in FIG. 18, the method of fabricating the chuck jaw according to the first embodiment may include cutting the jaw body 13 and cutting the second jaw body 13B. In the example illustrated in FIG. 18, cutting the jaw body 13 and cutting the second jaw body 13B are both executed with the foot portion 11 of the first block BL1 and the second foot portion 11B of the second block BL2 both being mounted on the chuck body 31.

As illustrated in FIG. 18, the method of fabricating the chuck jaw according to the first embodiment may include rotating the chuck body 31, on which both the first block BL1 and the second block BL2 are mounted, about the first axis AX and repeatedly bringing the cutting tool T into contact with the first block BL1 and the second block BL2 that are rotating about the first axis AX. In the example illustrated in FIG. 18, formation of the base surface 130 of the first block BL1 and formation of the base surface 130B of the second block BL2 are performed in parallel using a lathe tool T1. In other words, the first block BL1 and the second block BL2 are lathe turned substantially at the same time using the lathe tool T1.

As illustrated in FIGs. 19 and 20, the method of fabricating the chuck jaw according to the first embodiment may include adding the metal layer 15 on the jaw body 13 and adding the second metal layer 15B on the second jaw body 13B. The material included in the second metal layer 15B is a material that is the same as the material (that is, the first metal material G1) included in the metal layer 15. In the examples illustrated in FIGs. 19 and 20, adding the metal layer 15 on the jaw body 13 and adding the second metal layer 15B on the second jaw body 13B are both executed with the foot portion 11 and the second foot portion 11B both being mounted on the chuck body 31.

As illustrated in FIGs. 19 and 20, the method of fabricating the chuck jaw according to the first embodiment may include rotating the jaw body 13 and the second jaw body 13B about the first axis AX together with the chuck body 31, adding the metal layer 15 on the jaw body 13 being rotated about the first axis AX, and adding the second metal layer 15B on the second jaw body 13B being rotated about the first axis AX. Because the jaw body 13 and the second jaw body 13B are rotated about the first axis AX, when the first adding step is executed, there is no need to change the position of the metal applicator 5, or a change in the position of the metal applicator 5 is kept small.

As illustrated in FIG. 21, the method of fabricating the chuck jaw according to the first embodiment may include cutting the metal layer 15 to smooth the surface of the metal layer 15, and cutting the second metal layer 15B to smooth the surface of the second metal layer 15B. In the example illustrated in FIG. 21, cutting the metal layer 15 and cutting the second metal layer 15B are both executed with the foot portion 11 and the second foot portion 11B both being mounted on the chuck body 31.

As illustrated in FIG. 21, the method of fabricating the chuck jaw according to the first embodiment may include rotating the metal layer 15 and the second metal layer 15B about the first axis AX together with the chuck body 31 and repeatedly bringing the cutting tool T into contact with the metal layer 15 and the second metal layer 15B that are rotating about the first axis AX. In the example illustrated in FIG. 21, smoothing of the surface of the metal layer 15 and smoothing of the surface of the second metal layer 15B are performed in parallel using the lathe tool T1. In other words, the metal layer 15 and the second metal layer 15B are lathe turned substantially at the same time using the lathe tool T1.

Additionally, as illustrated in FIG. 23, the method of fabricating the chuck jaw according to the first embodiment may include forming the grooves 161 on the surface of the metal layer 15 and forming the grooves 161 on the surface of the second metal layer 15B. In the example illustrated in FIG. 23, forming the grooves 161 on the surface of the metal layer 15 and forming the grooves 161 on the surface of the second metal layer 15B are both executed with the foot portion 11 and the second foot portion 11B both being mounted on the chuck body 31.

### (Method of Machining Workpiece)

The method of machining the workpiece according to the first embodiment may include a step of fabricating the first chuck jaw 1A, a step of mounting the workpiece W on the plurality of chuck jaws 1, and a step of machining the workpiece. The step of machining the workpiece includes at least one of, for example, a later-described third cutting step, a later-described additive manufacturing step, a later-described fourth cutting step, a later-described second additive manufacturing step, and a later-described fifth cutting step.

The step of fabricating the first chuck jaw 1A includes (1) mounting, on the chuck body 31 rotatable about the first axis AX, the foot portion 11 of the first block BL1, which includes the foot portion 11 and the jaw body 13, as illustrated in FIGs. 16 and 17, and (2) adding the metal layer 15 on the jaw body 13 with the foot portion 11 being mounted on the chuck body 31 as illustrated in FIGs. 19 and 20.

The first metal material G1 included in the above-described metal layer 15 has a thermal conductivity lower than that of the second metal material included in the jaw body 13. The step of fabricating the first chuck jaw 1A may include the above-described first mounting step (the first step ST1), the above-described first cutting step (the second step ST2), the above-described first adding step (the third step ST3), the above-described second cutting step (the fourth step ST4), the above-described removing step (the fifth step ST5), and the above-described first carrying step (the sixth step ST6). Because the first step ST1 to the sixth step ST6 have already been described, repetitive descriptions of these steps are omitted.

Additionally, the method of machining the workpiece according to the first embodiment may include a step of fabricating the second chuck jaw 1B and/or a step of fabricating the third chuck jaw 1C. Because each of the step of fabricating the second chuck jaw 1B and the step of fabricating the third chuck jaw 1C is a step similar to the step of fabricating the first chuck jaw 1A, descriptions for the step of fabricating the second chuck jaw 1B and the step of fabricating the third chuck jaw 1C are omitted.

After execution of the step of fabricating the first chuck jaw 1A (more specifically, after execution of the step of fabricating the first chuck jaw 1A, the step of fabricating the second chuck jaw 1B, and the step of fabricating the third chuck jaw 1C), at a seventh step ST7, the first chuck jaw 1A is carried from the stocker 101 to the chuck body 31. The seventh step ST7 is a second carrying step.

In the example illustrated in FIG. 27, the second carrying step (the seventh step ST7) includes carrying the first chuck jaw 1A from the stocker 101 to the chuck body 31. In the example illustrated in FIG. 27, the second carrying step is automatically performed using the jaw exchanger 102. Alternatively, the second carrying step may be performed manually.

As illustrated in FIG. 28, at an eighth step ST8, the first chuck jaw 1A (more specifically, the foot portion 11 of the first chuck jaw 1A) is mounted on the chuck body 31 (more specifically, the movable portion 32 of the chuck body 31). The eighth step ST8 is a second mounting step. In the example illustrated in FIG. 28, the second mounting step is automatically performed using the jaw exchanger 102. Alternatively, the second mounting step may be performed manually.

Note that, when the above-described removing step (the fifth step St5) and the above-described first carrying step (the sixth step ST6) are omitted, the second carrying step (the seventh step ST7) and the second mounting step (the eighth step ST8) are omitted. In this case, after the first chuck jaw 1A is fabricated, the first chuck jaw 1A is consistently held by the chuck body 31 until the workpiece W is gripped by the plurality of chuck jaws 1 including the first chuck jaw 1A.

Additionally, the method of machining the workpiece according to the first embodiment may include mounting the second foot portion 11B of the second chuck jaw 1B on the chuck body 31 and mounting the third foot portion 11C of the third chuck jaw 1C on the chuck body 31.

At a ninth step ST9, the workpiece W is mounted on the plurality of chuck jaws 1 including the first chuck jaw 1A. The ninth step ST9 is a workpiece mounting step.

As illustrated in FIG. 29, the workpiece mounting step (the ninth step ST9) includes moving the plurality of chuck jaws 1 relative to the foot portion 33 of the chuck body 31 (refer to arrows AR1) so that the workpiece W comes into contact with the metal layer 15. The relative movement is performed using a jaw drive device 34.

As illustrated in FIG. 30, at a tenth step ST10, the workpiece W gripped by the plurality of chuck jaws 1 is cut. The tenth step ST10 is a cutting step (hereinafter, referred to as the "third cutting step").

As illustrated in FIG. 30, the third cutting step (the tenth step ST10) may include cutting the outer circumferential surface Wa of the workpiece W. Alternatively or additionally, the third cutting step (the tenth step ST10) may include cutting the second end face Wd of the workpiece W. When the workpiece W has a cylindrical shape, the third cutting step (the tenth step ST10) may include cutting the inner circumferential surface of the workpiece W.

The third cutting step (the tenth step ST10) may include lathe turning the workpiece W or milling the workpiece W.

The third cutting step is a cutting step executed prior to the later-described additive manufacturing step (a twelfth step ST12). The third cutting step (the tenth step ST10) may be omitted.

As illustrated in FIG. 31, at an eleventh step ST11, the workpiece W gripped by the plurality of chuck jaws 1 is preheated. The eleventh step ST11 is a preheating step.

In the example illustrated in FIG. 31, the preheating step (the eleventh step ST11) includes increasing the temperature of the workpiece W by irradiating the workpiece W with the laser LB. Alternatively or additionally, the preheating step (the eleventh step ST11) may include increasing the temperature of the workpiece W by passing an induced current through the workpiece W, increasing the temperature of the workpiece W by emitting a flame toward the workpiece W, or increasing the temperature of the workpiece W using a heater.

The preheating step (the eleventh step ST11) is executed with the metal layer 15 of the first chuck jaw 1A being in contact with the workpiece W. Because the thermal conductivity of the metal layer 15 is smaller than the thermal conductivity of the jaw body 13, heat dissipation from the workpiece W to the first chuck jaw 1A is kept small during execution of the preheating step. Thus, the energy required to preheat the workpiece W is kept small, and a burden on the environment is reduced.

When the preheating step (the eleventh step ST11) is performed by irradiating with the laser LB, the workpiece W may be irradiated with the laser LB so that the spot diameter of the laser LB on the workpiece surface in the preheating step is greater than the spot diameter of the laser LB on the workpiece surface in the later-described additive manufacturing step (the twelfth step ST12). When the spot diameter of the laser LB at the time of preheating is relatively large, local melting of the workpiece W at the time of preheating is prevented or reduced.

When the workpiece W is preheated in advance before being held by the plurality of chuck jaws 1, the preheating step (the eleventh step ST11) may be omitted. When the preheating step (the eleventh step ST11) is deemed unnecessary taking into consideration the size of the workpiece W, the shape of the workpiece W, the material properties of the workpiece W, and the material properties of the material added on the workpiece W at the later-described twelfth step ST12, the preheating step (the eleventh step ST11) is omitted.

As illustrated in FIG. 32, at the twelfth step ST12, the third material G3 is added on the workpiece W gripped by the plurality of chuck jaws 1. The twelfth step ST12 is the additive manufacturing step. The additive manufacturing step is executed using the additive manufacturing apparatus 50.

The additive manufacturing step (the twelfth step ST12) is executed with the metal layer 15 of the first chuck jaw 1A being in contact with the workpiece W. Because the thermal conductivity of the metal layer 15 is smaller than the thermal conductivity of the jaw body 13, during execution of the additive manufacturing step, heat dissipation from the workpiece W to the first chuck jaw 1A is reduced, and a decrease in the temperature of the workpiece W is reduced. Thus, a defect in adding material on the workpiece W (more specifically, breakage of material added on the workpiece W) is prevented or reduced. In the additive manufacturing step (the twelfth step ST12), the entire part of the first chuck jaw 1A that comes into contact with the workpiece W is preferably configured by the metal layer 15. Because part of the first chuck jaw 1A other than the metal layer 15 does not come into contact with the workpiece W, heat dissipation from the workpiece W to the first chuck jaw 1A is more effectively reduced.

In the example illustrated in FIG. 32, the additive manufacturing apparatus 50 supplies the third material G3 (more specifically, powder g3 of the third material) toward the workpiece W and also emits the laser LB toward the workpiece W. As a result, the third material heated by the energy of the laser LB is melted, and the melted material adheres to the workpiece W. Thus, the third material G3 is added on the workpiece W.

The third material G3 may be a material that is the same as the first metal material G1 included in the metal layer 15. In this case, it is unnecessary to change settings of a material supplying system of the additive manufacturing apparatus 50 between the step of fabricating the chuck jaw and the step of machining the workpiece.

Alternatively, the third material G3 may be a material that is different from the first metal material G1 included in the metal layer 15. In this case, options for the third material G3 are increased. The third material G3 may be a metal material or a non-metal material.

As illustrated in FIG. 33, at a thirteenth step ST13, the workpiece W gripped by the plurality of chuck jaws 1 is cut. The thirteenth step ST13 is a cutting step (hereinafter, referred to as the "fourth cutting step").

The fourth cutting step (the thirteenth step ST13) may include cutting the outer circumferential surface Wa of the workpiece W. Alternatively or additionally, the fourth cutting step (the thirteenth step ST13) may include cutting the second end face Wd of the workpiece W. When the workpiece W has a cylindrical shape, the fourth cutting step (the thirteenth step ST13) may include cutting the inner circumferential surface of the workpiece W.

The fourth cutting step (the thirteenth step ST13) may include lathe turning the workpiece W or milling the workpiece W. The fourth cutting step (the thirteenth step ST13) may include cutting an original portion Wp of the workpiece W. Alternatively or additionally, the fourth cutting step (the thirteenth step ST13) may include cutting an added portion Wq added on the original portion Wp of the workpiece W by executing the additive manufacturing step as illustrated in FIG. 33.

The fourth cutting step is a cutting step executed after the above-described additive manufacturing step (the twelfth step ST12). The fourth cutting step (the thirteenth step ST13) may be omitted.

In the example illustrated in FIG. 34, the hybrid machine tool includes the first supporter 3 and the second supporter 4. The first supporter 3 includes the chuck body 31 to which the plurality of chuck jaws 1 are to be mounted. The second supporter 4 includes a second chuck body 41 to which a plurality of chuck jaws are to be mounted. To distinguish the plurality of chuck jaws mounted on the second chuck body 41 from the plurality of chuck jaws 1 mounted on the chuck body 31, the former will be referred to as a second group of chuck jaws 1S. In other words, the second group of chuck jaws 1S is mounted on the second chuck body 41.

As illustrated in FIG. 34, at a fourteenth step ST14, the workpiece W is transferred from the first supporter 3 to the second supporter 4. The fourteenth step ST14 is a transferring step. The transferring step may be automatically executed using the first supporter 3 and the second supporter 4. Alternatively, part of the transferring step may be executed using a transferring device (for example, a gantry loader or a workpiece exchange hand) other than the first supporter 3 and the second supporter 4 or may be manually executed.

In the example illustrated in FIG. 34, the transferring step (the fourteenth step ST14) includes moving the second group of chuck jaws 1S in a direction to approach the workpiece W (refer to arrows AR2). As a result of the movement, the workpiece W is gripped by the second group of chuck jaws 1S. In the example illustrated in FIG. 34, the transferring step (the fourteenth step ST14) includes moving the plurality of chuck jaws 1 including the first chuck jaw 1A in a direction to separate from the workpiece W (refer to arrows AR3). As a result of the movement, the workpiece W gripped by the plurality of chuck jaws 1 is released.

In the example illustrated in FIG. 34, the transferring step (the fourteenth step ST14) includes moving the second supporter 4 in a direction parallel to the first axis AX relative to the first supporter 3 to increase the distance between the workpiece W and the first supporter 3 (refer to arrows AR4).

As illustrated in FIG. 35, at a fifteenth step ST15, the fourth material G4 is added on the workpiece W gripped by the second group of chuck jaws 1S. The fifteenth step ST15 is the second additive manufacturing step. The second additive manufacturing step is executed using the additive manufacturing apparatus 50. The fourth material G4 may be a material that is the same as the third material G3 or may be a material different from the third material G3.

The second additive manufacturing step (the fifteenth step ST15) is executed with the workpiece W being gripped by the second group of chuck jaws 1S. In the example illustrated in FIG. 35, each chuck jaw included in the second group of chuck jaws 1S includes a foot portion 11s to be mounted on the second chuck body 41, a jaw body 13s, and a metal layer 15s that is added on the jaw body 13s and comes into contact with the workpiece W. The material included in the jaw body 13s is preferably a material that is the same as the second metal material included in the jaw body 13 of the first chuck jaw 1A. Further, the material included in the metal layer 15s is preferably a material that is the same as the first metal material included in the metal layer 15 of the first chuck jaw 1A. In this case, because the thermal conductivity of the metal layer 15s is smaller than the thermal conductivity of the jaw body 13s, heat dissipation from the workpiece W to the second group of chuck jaws 1S is reduced during execution of the second additive manufacturing step. Further, a decrease in the temperature of the workpiece W is reduced. Thus, a defect in adding material on the workpiece W (more specifically, breakage of material added on the workpiece W) is prevented or reduced. When the second additive manufacturing step (the fifteenth step ST15) is omitted, the metal layer 15s may be omitted in the second group of chuck jaws 1S. In other words, each chuck jaw included in the second group of chuck jaws 1S may include a general chuck jaw.

After executing the fourteenth step ST14 (the transferring step) and before executing the fifteenth step ST15 (the second additive manufacturing step), the workpiece W may be preheated using a preheating device. When preheating is deemed unnecessary taking into consideration the temperature of the workpiece W, the shape of the workpiece W, the material properties of the workpiece W, and the material properties of the fourth material G4 added on the workpiece W at the fifteenth step ST15, the preheating is omitted.

As illustrated in FIG. 36, at a sixteenth step ST16, the workpiece W gripped by the second group of chuck jaws 1S is cut. The sixteenth step ST16 is a cutting step (hereinafter, referred to as the "fifth cutting step").

The fifth cutting step (the sixteenth step ST16) may include cutting the outer circumferential surface Wa of the workpiece W. Alternatively or additionally, the fifth cutting step (the sixteenth step ST16) may include cutting the first end face Wb of the workpiece W. When the workpiece W has a cylindrical shape, the fifth cutting step (the sixteenth step ST16) may include cutting the inner circumferential surface of the workpiece W.

The fifth cutting step (the sixteenth step ST16) may include lathe turning the workpiece W or milling the workpiece W. The fifth cutting step (the sixteenth step ST16) may include cutting the original portion Wp of the workpiece W. Alternatively or additionally, the fifth cutting step (the sixteenth step ST16) may include cutting a second added portion Wr added on the original portion Wp of the workpiece W by executing the second additive manufacturing step.

The fifth cutting step may be executed after the second additive manufacturing step (the fifteenth step ST15) or may be executed before the second additive manufacturing step (the fifteenth step ST15). The fifth cutting step (the sixteenth step ST16) may be omitted.

The above-described transferring step (the fourteenth step ST14), the above-described second additive manufacturing step (the fifteenth step ST15), and the above-described fifth cutting step (the sixteenth step ST16) may all be omitted.

### (Method of Repairing Chuck Jaw)

Next, the method of repairing the chuck jaw according to the first embodiment will be described. The chuck jaw that is to be repaired by the method of repairing the chuck jaw according to the first embodiment is, for example, the first chuck jaw 1A according to the first embodiment. Because the first chuck jaw 1A has already been described, repetitive descriptions of the first chuck jaw 1A are omitted.

As illustrated in FIG. 37, at a seventeenth step ST17, a base surface 17 is formed on the first chuck jaw 1A. The seventeenth step ST17 is a base surface forming step.

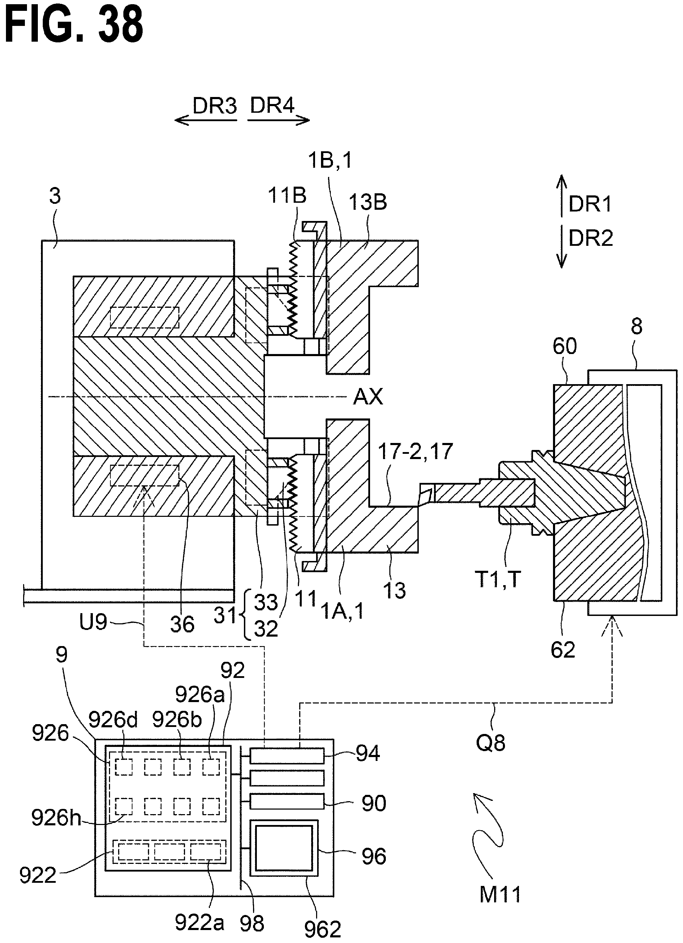

The base surface forming step (the seventeenth step ST17) includes forming the base surface 17 by cutting at least part of the metal layer 15. In the example illustrated in FIG. 37, the base surface forming step (the seventeenth step ST17) includes forming a base surface 17-1 on the metal layer 15 of the chuck jaw 1 by cutting part of the metal layer 15. Alternatively, as illustrated in FIG. 38, the base surface forming step (the seventeenth step ST17) may include forming a base surface 17-2 on the jaw body 13 of the chuck jaw 1 by cutting all of the metal layer 15.

In the examples illustrated in FIGs. 37 and 38, a step of forming the base surface 17 on the first chuck jaw 1A is executed with the foot portion 11 of the first chuck jaw 1A being mounted on the chuck body 31 (more specifically, the movable portion 32 of the chuck body 31).

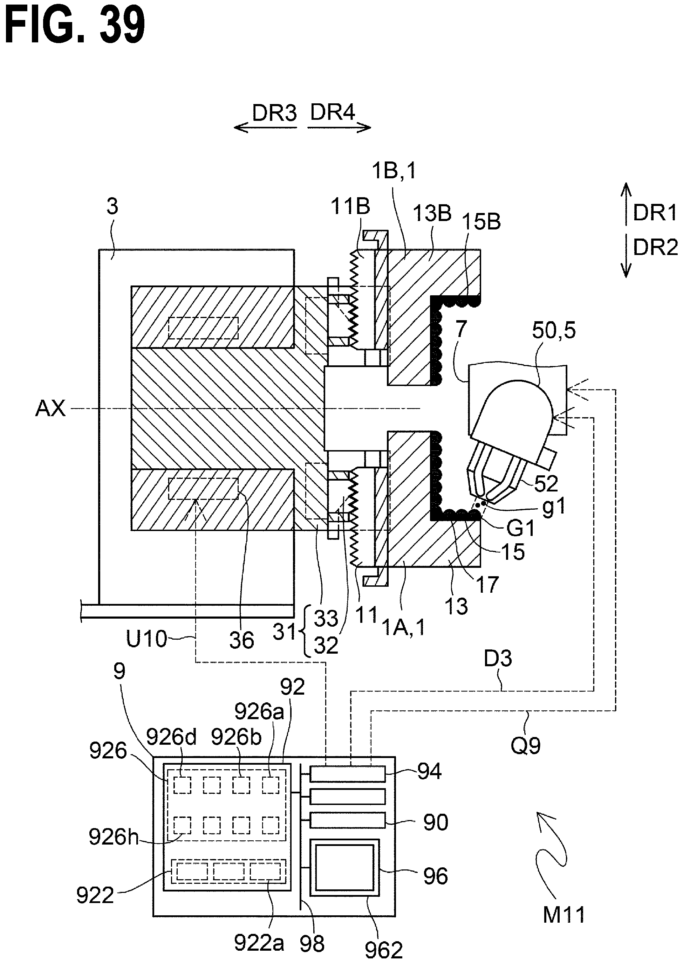

As illustrated in FIG. 39, at an eighteenth step ST18, the metal layer 15 is reformed. The eighteenth step ST18 is a reformation step.

The reformation step includes reforming the metal layer 15 by adding the first metal material G1 on the base surface 17 (for example, the base surface 17-1 formed on the metal layer 15 as illustrated in FIG. 37, or the base surface 17-2 formed on the jaw body 13 as illustrated in FIG. 38). Adding the first metal material on the base surface 17 is executed using the metal applicator 5 (for example, the additive manufacturing apparatus 50 or the spraying device).

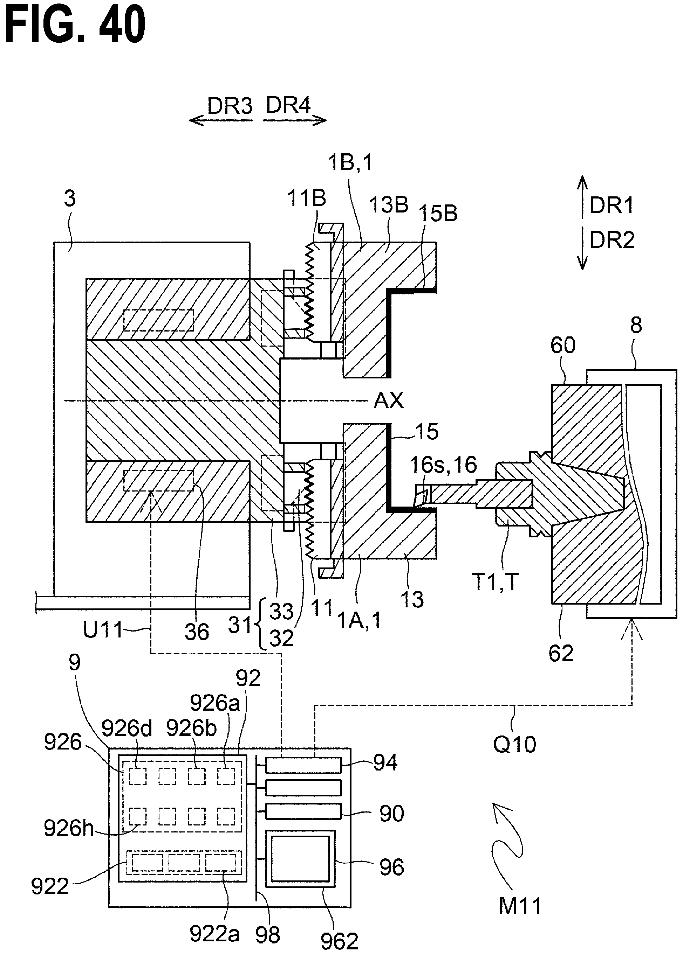

As illustrated in FIG. 40, at a nineteenth step ST19, the surface of the metal layer 15 is cut. The nineteenth step ST19 is a sixth cutting step. The sixth cutting step includes cutting the metal layer 15 to smooth the surface 16 of the metal layer 15 that has been reformed. The surface of the metal layer 15 becomes the cut surface 16s that is smooth, by cutting the metal layer 15.

Additionally, the sixth cutting step (the nineteenth step ST19) may include forming the grooves 161 on the surface 16 of the metal layer 15. For example, the sixth cutting step (the nineteenth step ST19) may include forming the grooves 161 on the surface of the metal layer 15 by bringing a tool such as the groove-forming tool T3 into contact with the metal layer 15 rotating about the first axis AX (refer to FIG. 23 if necessary).

The first chuck jaw 1A is repaired by the above-described steps. The first chuck jaw 1A that has been used is repaired, and the repaired first chuck jaw 1A is reused. This reduces frequency of disposal of the chuck jaw. Accordingly, a burden on the environment is reduced.

### (Second Embodiment)

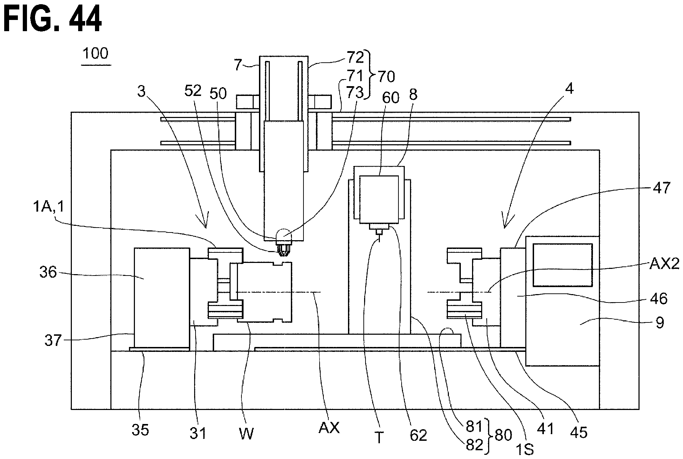

The hybrid machine tool 100 according to a second embodiment will be described with reference to FIGs. 1 to 44. FIG. 44 is a diagram schematically illustrating the hybrid machine tool 100 according to the second embodiment.

As illustrated in FIG. 44, the hybrid machine tool 100 according to the second embodiment includes the additive manufacturing apparatus 50, a cutting tool 60, the first supporter 3, a first mover 7, a second mover 8, and a controller 9.

The additive manufacturing apparatus 50 and the cutting tool 60 are capable of fabricating the first chuck jaw 1A (for example, refer to FIG. 24) from the first block BL1 (for example, refer to FIG. 17) mounted on the chuck body 31. Additionally, the additive manufacturing apparatus 50 and the cutting tool 60 are capable of machining the workpiece W gripped by the plurality of chuck jaws 1 including the first chuck jaw 1A.

As illustrated in FIG. 20, the additive manufacturing apparatus 50 includes a material supplying device 55 and a first head 52. The first head 52 emits the laser LB. As illustrated in FIG. 21, the cutting tool 60 includes a second head 62. The second head 62 supports a tool.

The first supporter 3 supports the workpiece W via the plurality of chuck jaws 1 including the first chuck jaw 1A. Because the first chuck jaw 1A and the plurality of chuck jaws 1 have already been described in the first embodiment, repetitive descriptions of the first chuck jaw 1A and the plurality of chuck jaws 1 are omitted.

As illustrated in FIG. 12, the first supporter 3 includes the chuck body 31 to which the foot portion of the first chuck jaw 1A is to be mounted. In addition to the foot portion of the first chuck jaw 1A, the second foot portion 11B of the second chuck jaw 1B and the third foot portion 11C of the third chuck jaw 1C are mounted on the chuck body 31. The chuck body 31 is rotatable about the first axis AX.

As illustrated in FIG. 29, the first supporter 3 includes the jaw drive device 34 and a first rotary drive device 36. The jaw drive device 34 moves the chuck jaw 1.

The jaw drive device 34 moves the plurality of chuck jaws 1 in the first direction DR1 separating from the first axis AX (more specifically, in a radial direction separating from the first axis AX), or in the second direction DR2 approaching the first axis AX.

The first rotary drive device 36 causes the chuck body 31 to be rotated about the first axis AX. The first rotary drive device 36 may integrally rotate the chuck body 31 and the plurality of chuck jaws 1, which are supported by the chuck body 31, about the first axis AX. The first rotary drive device 36 may integrally rotate the chuck body 31, the plurality of chuck jaws 1, which are supported by the chuck body 31, and the workpiece W gripped by the plurality of chuck jaws 1 about the first axis AX.

In the example illustrated in FIG. 44, the first mover 7 moves the first head 52 relative to the first supporter 3. The first mover 7 includes a first head mover 70. The first head mover 70 moves the first head 52.

**In** the example illustrated in FIG. 44, the first head mover 70 includes a first drive device 71 and a second drive device 72. The first drive device 71 moves the first head 52 in a direction parallel to the first axis AX. The second drive device 72 moves the first head 52 in a direction perpendicular to the first axis AX (for example, in a vertical direction). The first head mover 70 may include a device that is capable of moving the first head 52 three-dimensionally. The first head mover 70 may include a tilting device 73 that tilts the first head 52.

**In** the example illustrated in FIG. 44, the second mover 8 moves the second head 62 relative to the first supporter 3. The second mover 8 includes a second head mover 80. The second head mover 80 moves the second head 62.

In the example illustrated in FIG. 44, the second head mover 80 includes a third drive device 81 and a fourth drive device 82. The third drive device 81 moves the second head 62 in a direction parallel to the first axis AX. The fourth drive device 82 moves the second head 62 in a direction perpendicular to the first axis AX (for example, in the vertical direction). The second head mover 80 may include a device that is capable of moving the second head 62 three-dimensionally.

The second mover 8 may be a device completely separate from the first mover 7. Alternatively, a part of the second mover 8 and a part of the first mover 7 may be shared.

The controller 9 controls at least the additive manufacturing apparatus 50, the cutting tool 60, the first supporter 3, the first mover 7, and the second mover 8.

### (Controller 9)

The controller 9 will be described in more detail. As illustrated in FIG. 18, the controller 9 includes a hardware processor 90 (hereinafter, simply referred to as a "processor 90"), a memory 92, a communication circuit 94, and an input device 96 (for example, a display 962 with a touch panel). The processor 90, the memory 92, the communication circuit 94, and the input device 96 may be coupled to each other via a bus 98.

The memory 92 is a storage medium from which the processor 90 of the controller 9 is readable. The memory 92 may include a non-volatile or volatile semiconductor memory, a magnetic disk, or other forms of memory. The non-volatile or volatile semiconductor memory includes, for example, a RAM, a ROM, and a flash memory.

The memory 92 stores data 926 (for example, data necessary for the controller 9 to execute each of modes to be described later) and a program 922 (for example, a jaw fabricating program 922a, a machining program 922b, and a jaw exchanging program 922c).

The data 926 stored in the memory 92 may include block shape data 926a indicating the shape of the first block BL1, jaw shape data 926b indicating the shape of the first chuck jaw 1A, and workpiece shape data 926c indicating the shape of the workpiece W.

The data 926 stored in the memory 92 may include first control data 926d necessary to execute a jaw fabricating mode M1 to be described later. The first control data 926d may include first movement path data that specifies a movement path of the first head 52 and second movement path data that specifies a movement path of the cutting tool T. The first control data 926d may include data that designates the rotational angle of the chuck body 31 about the first axis AX and/or data that designates the rotational speed of the chuck body 31 about the first axis AX.

The data 926 stored in the memory 92 may include second control data 926e necessary to execute a preheating mode M5 to be described later. The second control data 926e may include threshold data (for example, a first temperature TH1 to be described later, a first threshold TH2 to be described later, and a first time period TH3 to be described later) for determining whether preheating of the workpiece W has been completed. The second control data 926e may include a laser output parameter. The second control data 926e may include third movement path data that specifies the movement path of the first head 52 and/or data that designates the rotational speed of the chuck body 31 about the first axis AX.

The data 926 stored in the memory 92 may include third control data 926f necessary to execute an additive manufacturing mode M6 to be described later. The third control data 926f may include fourth movement path data that specifies the movement path of the first head 52. The third control data 926f may include data that designates the rotational angle of the chuck body 31 about the first axis AX and/or data that designates the rotational speed of the chuck body 31 about the first axis AX.

The data 926 stored in the memory 92 may include fourth control data 926g necessary to execute a cutting mode M7 to be described later. The fourth control data 926g may include fifth movement path data that specifies the movement path of the cutting tool T. The fourth control data 926g may include data that designates the rotational angle of the chuck body 31 about the first axis AX and/or data that designates the rotational speed of the chuck body 31 about the first axis AX.

The memory 92 may store other data 926h.

The input device 96 is not limited to the display 962 with a touch panel. For example, the controller 9 may include the input device 96 such as a button, a switch, a lever, a pointing device, or a keyboard and a display that displays the data input to the input device 96 or other data. Alternatively, a plurality of computers may operate together to function as the controller 9. The memory 92 may be distributed to a plurality of locations. For example, part of the memory 92 may be included in a cloud storage.

The controller 9 generates a control command by executing the program 922 stored in the memory 92 (for example, the jaw fabricating program 922a, the machining program 922b, or the jaw exchanging program 922c) by the processor 90. The communication circuit 94 transmits the generated control command to the devices to be controlled (for example, the additive manufacturing apparatus 50, the cutting tool 60, the first supporter 3, the first mover 7, and the second mover 8). Thus, executing the program 922 by the processor 90 enables the controller 9 to control, for example, the additive manufacturing apparatus 50, the cutting tool 60, the first supporter 3, the first mover 7, and the second mover 8.

The jaw fabricating mode M1 and the additive manufacturing mode M6 that are executable by the controller 9 will be described.

In the examples illustrated in FIGs. 20 and 21, the controller 9 is capable of executing the jaw fabricating mode M1 by executing the program 922 (more specifically, the jaw fabricating program 922a). The jaw fabricating mode M1 is performed with the foot portion 11 being mounted on the chuck body 31.

As illustrated in FIG. 20, the jaw fabricating mode M1 includes adding, using the additive manufacturing apparatus 50, the metal layer 15 including the first metal material G1 on the jaw body 13 including the second metal material. The first metal material G has a thermal conductivity lower than that of the second metal material.

More specifically, the jaw fabricating mode M1 includes transmitting the control command to at least the first mover 7 and the additive manufacturing apparatus 50 from the controller 9 so that the metal layer 15 that includes the first metal material G1 having a thermal conductivity lower than that of the second metal material is added on the jaw body 13 including the second metal material. The first mover 7 that receives the control command from the controller 9 moves the first head 52 to a position facing the jaw body 13. Additionally, the additive manufacturing apparatus 50 that receives the control command from the controller 9 adds the metal layer 15 on the jaw body 13.

As illustrated in FIG. 21, the jaw fabricating mode M1 includes smoothing the surface of the metal layer 15 by cutting the metal layer 15 using the cutting tool 60.

More specifically, the jaw fabricating mode M1 includes transmitting the control command to at least the second mover 8 so that the metal layer 15 is cut by the cutting tool T. The second mover 8 that receives the control command from the controller 9 moves the second head 62 so that the cutting tool T comes into contact with the metal layer 15. When the cutting tool T comes into contact with the metal layer 15, the metal layer 15 is cut, and the surface of the metal layer 15 becomes a smooth surface.

In the example illustrated in FIG. 32, the controller 9 is capable of executing the additive manufacturing mode M6 by executing the program 922 (more specifically, the machining program 922b). The additive manufacturing mode M6 is executed with the workpiece W being gripped by the plurality of chuck jaws 1 including the first chuck jaw 1A.

As illustrated in FIG. 32, the additive manufacturing mode M6 includes adding the third material G3 on the workpiece W that is in contact with the metal layer 15 of the first chuck jaw 1A, using the additive manufacturing apparatus 50.

More specifically, the additive manufacturing mode M6 includes transmitting the control command to at least the first mover 7 and the additive manufacturing apparatus 50 so that the third material G3 is added on the workpiece W with the workpiece W being in contact with the metal layer 15 of the first chuck jaw 1A. The first mover 7 that receives the control command from the controller 9 moves the first head 52 to a position facing the workpiece W. Additionally, the additive manufacturing apparatus 50 that receives the control command from the controller 9 adds the third material G3 on the workpiece W. The third material G3 may be a material that is the same as the first metal material G1 included in the metal layer 15 or a material that is different from the first metal material G1 included in the metal layer 15.

The hybrid machine tool 100 according to the second embodiment is capable of executing the jaw fabricating mode M1 including adding, on the jaw body 13, the metal layer 15 having a thermal conductivity lower than that of the jaw body13 and the additive manufacturing mode M6 including adding the third material on the workpiece W with the workpiece W being in contact with the metal layer 15. This reduces heat dissipation from the workpiece W to the first chuck jaw 1A and thus reduces a decrease in the temperature of the workpiece W during additive manufacturing of adding the third material G3 on the workpiece W. Thus, a defect in adding material on the workpiece W (more specifically, breakage of material added on the workpiece W) is prevented or reduced.

### (Optional Structures)

Next, optional structures adoptable to the hybrid machine tool 100 according to the second embodiment (or the chuck jaw 1 according to the first embodiment, the method of fabricating the chuck jaw according to the first embodiment, the method of machining the workpiece according to the first embodiment, and the method of repairing the chuck jaw according to the first embodiment) will be described with reference to FIGs. 1 to 44.

### (Jaw Fabricating Mode M1)

The jaw fabricating mode M1 according to an embodiment will be described in more detail. The controller 9 executes the jaw fabricating mode M1 by executing the program 922 (more specifically, the jaw fabricating program 922a).

In the example illustrated in FIG. 18, the jaw fabricating mode M1 includes forming the base surface 130 of the jaw body 13 (more specifically, forming the first base surface 131 and the second base surface 132 of the jaw body 13) by cutting the jaw body 13 using the cutting tool 60.

More specifically, the jaw fabricating mode M1 includes transmitting a movement command (hereinafter, referred to as a "first movement command Q1") from the controller 9 to the second mover 8 and transmitting a rotation command (hereinafter, referred to as a "first rotation command U1") from the controller 9 to the first rotary drive device 36 so that the base surface 130 is formed on the jaw body 13.

The second mover 8 that receives the first movement command Q1 from the controller 9 moves the second head 62 so that the lathe tool T1 comes into contact with the jaw body 13. The first rotary drive device 36 that receives the first rotation command U1 from the controller 9 rotates the jaw body 13 about the first axis AX1. Thus, the jaw body 13 is lathe turned with the lathe tool T1, and the base surface 130 (more specifically, the first base surface 131 and the second base surface 132) is formed on the jaw body 13.

Note that, when the formation of the base surface 130 is performed using a milling tool, the jaw fabricating mode M1 includes transmitting the first movement command Q1 from the controller 9 to the second mover 8 and transmitting a tool rotation command from the controller 9 to the cutting tool 60.

In the examples illustrated in FIGs. 19 and 20, the jaw fabricating mode M1 includes adding the metal layer 15 on the base surface 130 (more specifically, the first base surface 131 and the second base surface 132) using the additive manufacturing apparatus 50.

More specifically, the jaw fabricating mode M1 includes transmitting a movement command (hereinafter, referred to as a "second movement command Q2") from the controller 9 to the first mover 7 and transmitting an additive manufacturing command (hereinafter, referred to as a "first additive manufacturing command D1") from the controller 9 to the additive manufacturing apparatus 50 so that the metal layer 15 is added on the base surface 130. Additionally, the jaw fabricating mode M1 may include transmitting a rotation command (hereinafter, referred to as a "second rotation command U2") from the controller 9 to the first rotary drive device 36.

The first mover 7 that receives the second movement command Q2 from the controller 9 moves the first head 52 to a position facing the base surface 130. The additive manufacturing apparatus 50 that receives the first additive manufacturing command D1 from the controller 9 adds the metal layer 15 on the base surface 130 (more specifically, adds the metal layer 15 on the first base surface 131 and the second base surface 132).

In a case in which the second rotation command U2 is transmitted from the controller 9 to the first rotary drive device 36, the first rotary drive device 36 that receives the second rotation command U2 rotates the jaw body 13 about the first axis AX. In this case, the metal layer 15 is added on the base surface 130 without moving the first head 52 by a large amount.

In the examples illustrated in FIGs. 21 and 22, the jaw fabricating mode M1 includes smoothing the surface of the metal layer 15 by cutting the metal layer 15 using the cutting tool 60.

More specifically, the jaw fabricating mode M1 includes transmitting a movement command (hereinafter, referred to as a "third movement command Q3") from the controller 9 to the second mover 8 and transmitting a rotation command (hereinafter, referred to a "third rotation command U3") from the controller 9 to the first rotary drive device 36 so that the surface of the metal layer 15 is smoothed (more specifically, so that the first cut surface 16s-1 extending in a direction parallel to the first axis AX and the second cut surface 16s-2 perpendicular to the first axis AX are formed on the metal layer 15).

The second mover 8 that receives the third movement command Q3 from the controller 9 moves the second head 62 so that the lathe tool T1 comes into contact with the metal layer 15. The first rotary drive device 36 that receives the third rotation command U3 from the controller 9 rotates the jaw body 13 on which the metal layer 15 has been added about the first axis AX1. Thus, the metal layer 15 is lathe turned with the lathe tool T1, and the surface of the metal layer 15 is smoothed.

Note that, when the smoothing of the metal layer 15 is performed using a milling tool, the jaw fabricating mode M1 includes transmitting the third movement command Q3 from the controller 9 to the second mover 8 and transmitting the tool rotation command from the controller 9 to the cutting tool 60.

As illustrated in FIG. 23, the jaw fabricating mode M1 may include forming the grooves 161 on the surface of the metal layer 15 by cutting the metal layer 15 using the cutting tool 60.

More specifically, the jaw fabricating mode M1 may include transmitting a movement command (hereinafter, referred to as a "fourth movement command Q4") from the controller 9 to the second mover 8 and transmitting a rotation command (hereinafter, referred to as a "fourth rotation command U4") from the controller 9 to the first rotary drive device 36 so that the grooves 161 are formed on the surface of the metal layer 15.

As illustrated in FIG. 23, the second mover 8 that receives the fourth movement command Q4 from the controller 9 moves the second head 62 so that the groove-forming tool T3 comes into contact with the metal layer 15. The first rotary drive device 36 that receives the fourth rotary command U4 from the controller 9 rotates the jaw body 13 on which the metal layer 15 has been added about the first axis AX. Thus, the metal layer 15 is cut by the groove-forming tool T3, and the grooves 161 are formed on the surface of the metal layer 15.

### (Stocker 101)

As illustrated in FIGs. 26 and 27, the hybrid machine tool 100 may include the stocker 101 that stores a plurality of chuck jaws. In the stocker 101, each chuck jaw may be held by the jaw holder 101a.

### (Jaw Exchanger 102)

The hybrid machine tool 100 may include the jaw exchanger 102. The jaw exchanger 102 exchanges the plurality of chuck jaws 1 mounted on the chuck body 31 with other plurality of chuck jaws.

### (Removing Mode M2)

In the examples illustrated in FIGs. 24 and 25, the controller 9 executes a removing mode M2 of removing the first chuck jaw 1A fabricated using the additive manufacturing apparatus 50 and the cutting tool 60 from the chuck body 31 by executing the program 922 (more specifically, the jaw exchanging program 922c).

As illustrated in FIGs. 24 and 25, the removing mode M2 includes moving the first chuck jaw 1A to a removing position P1 using the first rotary drive device 36 and removing the first chuck jaw 1A from the chuck body 31 using the jaw exchanger 102.

More specifically, as illustrated in FIG 24, the removing mode M2 includes transmitting a rotation command (hereinafter, referred to as a "fifth rotation command U5") from the controller 9 to the first rotary drive device 36 so that the first chuck jaw 1A moves to the removing position P1. Further, as illustrated in FIG 25, the removing mode M2 includes transmitting a removing command F1 from the controller 9 to the jaw exchanger 102 so that the first chuck jaw 1A positioned at the removing position P1 is removed from the chuck body 31.

In the example illustrated in FIG. 24, the first rotary drive device 36 that receives the fifth rotation command U5 rotates the chuck body 31 about the first axis AX so that the first chuck jaw 1A moves to the removing position P1. In the example illustrated in FIG. 24, the jaw exchanger 102 that receives the removing command F1 presses the operation portion 39 so that the first chuck jaw 1A and the chuck body 31 are disengaged from each other. Further, in the example illustrated in FIG. 25, the jaw exchanger 102 that receives the removing command F1 pulls out the first chuck jaw 1A from the chuck body 31. Thus, the first chuck jaw 1A is removed from the chuck body 31.

As illustrated in FIG. 26, the removing mode M2 may include carrying the first chuck jaw 1A from the chuck body 31 to the stocker 101 using the jaw exchanger 102.

### (Mounting Mode M3)

In the example illustrated in FIG. 28, the controller 9 executes a mounting mode M3 of mounting the first chuck jaw 1A fabricated using the additive manufacturing apparatus 50 and the cutting tool 60 on the chuck body 31 by executing the program 922 (more specifically, the jaw exchanging program 922c).

As illustrated in FIGs. 27 and 28, the mounting mode M3 may include carrying the first chuck jaw 1A from the stocker 101 to the chuck body 31 using the jaw exchanger 102.

As illustrated in FIG. 28, the mounting mode M3 includes mounting the first chuck jaw 1A on the chuck body 31 using the jaw exchanger 102.

More specifically, the mounting mode M3 may include transmitting a mounting command F2 from the controller 9 to the jaw exchanger 102 so that the first chuck jaw 1A is mounted on the chuck body 31.

In the example illustrated in FIG. 28, the jaw exchanger 102 that receives the mounting command F2 presses the operation portion 39 so that the engaging portion 312 of the chuck body 31 moves from an extended position to a retracted position. Additionally, the jaw exchanger 102 that receives the mounting command F2 inserts the first chuck jaw 1A to the chuck body 31. Furthermore, the jaw exchanger 102 that receives the mounting command F2 releases the operation portion 39 that has been pressed so that the engaging portion 312 of the chuck body 31 moves from the retracted position to the extended position. Thus, the first chuck jaw 1A is mounted on the chuck body 31.

### (Workpiece Mounting Mode M4)

In the example illustrated in FIG. 29, the controller 9 executes a workpiece mounting mode M4 of mounting the workpiece W on the plurality of chuck jaws 1 by executing the program 922 (more specifically, the machining program 922b).

As illustrated in FIG. 29, the workpiece mounting mode M4 includes mounting the workpiece W on the plurality of chuck jaws 1 using the jaw drive device 34.

More specifically, as illustrated in FIG. 29, the workpiece mounting mode M4 includes transmitting a gripping command J1 from the controller 9 to the jaw drive device 34. The jaw drive device 34 that receives the gripping command J1 from the controller 9 moves the movable portion 32 of the chuck body 31 in the first direction DR1 or the second direction DR2 so that the workpiece W is gripped by the plurality of chuck jaws 1. Thus, the workpiece W is mounted on the plurality of chuck jaws 1.

### (Preheating Device 58)

As illustrated in FIG. 31, the hybrid machine tool 100 may include a preheating device 58 that preheats the workpiece W. In the example illustrated in FIG. 31, the preheating device 58 includes a laser irradiation device 51 that increases the temperature of the workpiece W by irradiating the workpiece W with the laser LB. In the examples illustrated in FIGs. 31 and 32, the laser irradiation device 51 functions as the preheating device 58 (refer to FIG. 31) that preheats the workpiece W and also functions as part of the additive manufacturing apparatus 50 (refer to FIG. 32) that melts the third material G3 to be added on the workpiece W.

Alternatively or additionally, the preheating device 58 may include a high-frequency induction heating device that increases the temperature of the workpiece W by passing an induced current through the workpiece W. Alternatively or additionally, the preheating device 58 may include a heater such as a ceramic heater. Alternatively or additionally, the preheating device 58 may include a gas burner that radiates a flame toward the workpiece W.

### (Preheating Mode M5)

In the example illustrated in FIG. 31, the controller 9 executes the preheating mode M5 by executing the program 922 (more specifically, the machining program 922b). The preheating mode M5 is a mode executed immediately before the additive manufacturing mode M6. The preheating mode M5 includes preheating the workpiece W using the preheating device 58.

More specifically, the preheating mode M5 includes transmitting a preheating command V1 to at least the preheating device 58 from the controller 9 so that the temperature of the workpiece W is increased. Additionally, the preheating mode M5 may include at least one of transmitting a movement command (hereinafter, referred to as a "fifth movement command Q5") from the controller 9 to the first mover 7 and transmitting a rotation command (hereinafter, referred to a "sixth rotation command U6") from the controller 9 to the first rotary drive device 36.

The preheating device 58 that receives the preheating command V1 from the controller 9 adds energy to the workpiece W to increase the temperature of the workpiece W. In the example illustrated in FIG. 31, the laser irradiation device 51 that receives the preheating command V1 emits the laser LB toward the workpiece W. Further, the first mover 7 that receives the fifth movement command Q5 or the first rotary drive device 36 that receives the sixth rotation command U6 causes the first head 52 to move relative to the workpiece W gripped by the plurality of chuck jaws 1. Thus, the workpiece W is preheated by the laser LB emitted from the first head 52. Further, because the first head 52 that emits the laser LB moves relative to the workpiece W, the irradiation of the workpiece W with the laser LB is prevented from concentrating at a specific region.

As illustrated in FIG. 31, the hybrid machine tool 100 may include a temperature sensor 56 such as an infrared temperature sensor. The temperature sensor 56 detects the temperature of the workpiece W. The temperature sensor 56 transmits signal data DA indicating the temperature of the workpiece W to the controller 9. Based on the signal data DA to be received from the temperature sensor 56, the controller 9 may cause the preheating device 58 to continue preheating the workpiece W until the temperature of the workpiece W reaches the first temperature TH1 that has been previously set, and may transmit a preheating end command to the preheating device 58 in response to the temperature of the workpiece W reaching the first temperature TH1 that has been previously set (a first example).

Alternatively, based on the signal data DA to be received from the temperature sensor 56, the controller 9 may cause the preheating device 58 to continue preheating the workpiece W until a range of temperature increase of the workpiece W from the temperature of the workpiece W at the point in time when the preheating mode M5 is started reaches the first threshold TH2 that has been previously set. The range of temperature increase is, in other words, a value obtained by subtracting the temperature of the workpiece W at the point in time when the preheating mode M5 is started from the current temperature of the workpiece W. The controller 9 may transmit the preheating end command to the preheating device 58 in response to the range of temperature increase described above reaching the first threshold TH2 (a second example).

Alternatively or additionally, the hybrid machine tool 100 may include a timer 99. The timer 99 may be configured by hardware, or the controller 9 may execute the program 922, so that the controller 9 itself functions as a timer. The timer 99 counts the elapsed time from when the transmission of the preheating command V1 from the controller 9 to the preheating device 58 is started. The controller 9 may cause the preheating device 58 to continue preheating the workpiece W until the above-described elapsed time counted by the timer 99 reaches the first time period TH3 that has been previously set, and may transmit the preheating end command to the preheating device 58 in response to the above-described elapsed time reaching the first time period TH3 (a third example).

In each of the first example, the second example, and the third example, which have been described above, the preheating device 58 that receives the preheating command V1 adds energy to the workpiece W to increase the temperature of the workpiece W. Further, the preheating device 58 that receives the preheating end command ends adding energy to the workpiece W to stop increasing the temperature of the workpiece W.

### (Additive Manufacturing Apparatus 50)

In the example illustrated in FIG. 32, the additive manufacturing apparatus 50 includes the material supplying device 55 and the laser irradiation device 51. The material supplying device 55 supplies the third material G3 to be added on the workpiece W. The laser irradiation device 51 includes the first head 52 that emits the laser LB.

The material supplying device 55 may be a device that supplies a wire (for example, a metal wire) toward the workpiece W. In this case, the wire is melted by being irradiated with the laser LB, and the melted material formed by the melting adheres to the workpiece W. Alternatively, the material supplying device 55 may be a device that supplies powder (for example, metal powder) toward the workpiece W. In this case, the powder is melted by being irradiated with the laser LB, and the melted material formed by the melting adheres to the workpiece W.

When the third material G3 is a material different from the first metal material G1, it is preferable that the material supplying device 55 be capable of selectively supplying the first metal material G1 and the third material G3. The hybrid machine tool 100 may include a first tank that contains the first metal material G1 and a second tank that contains the third material G3.

### (Additive Manufacturing Mode M6)

In the example illustrated in FIG. 32, the controller 9 executes the additive manufacturing mode M6 by executing the program 922 (more specifically, the machining program 922b). The additive manufacturing mode M6 includes adding the third material G3 on the workpiece W that is in contact with the metal layer 15 of the first chuck jaw 1A, using the additive manufacturing apparatus 50.

More specifically, the additive manufacturing mode M6 includes transmitting a movement command (hereinafter, referred to as a "sixth movement command Q6") from the controller 9 to the first mover 7 and transmitting an additive manufacturing command (hereinafter, referred to as a "second additive manufacturing command D2") from the controller 9 to the additive manufacturing apparatus 50 so that the third material G3 is added on the workpiece W gripped by the plurality of chuck jaws 1 including the first chuck jaw 1A. Additionally, the additive manufacturing mode M6 may include transmitting a rotation command (hereinafter, referred to as a "seventh rotation command U7") from the controller 9 to the first rotary drive device 36.

The first mover 7 that receives the sixth movement command Q6 from the controller 9 moves the first head 52 to a position facing the workpiece W. The additive manufacturing apparatus 50 that receives the second additive manufacturing command D2 from the controller 9 adds the third material G3 on the workpiece W.

In a case in which the seventh rotation command U7 is transmitted from the controller 9 to the first rotary drive device 36, the first rotary drive device 36 that receives the seventh rotation command U7 rotates the workpiece W about the first axis AX. In this case, the third material G3 is added on the workpiece W without moving the first head 52 by a large amount.

### (Cutting Tool 60)

The cutting tool 60 includes the second head 62. As illustrated in FIG. 36, the second head 62 may include a motor 66. The motor 66 rotates a milling tool T2 about a central axis of the milling tool. More specifically, the second head 62 may include a rotating body 63, a frame 64, and the motor 66. The rotating body 63 holds the milling tool T2. The frame 64 rotatably supports the rotating body 63. The motor 66 rotates the rotating body 63 relative to the frame 64.

The second head 62 may be a turret. In this case, the second head 62 may be a turret head that is capable of supporting both the lathe tool T1 and the milling tool T2. The turret head may be capable of supporting the lathe tool T1, the milling tool T2, and the groove-forming tool T3 at the same time.

### (Cutting Mode M7)

In the example illustrated in FIG. 30 or FIG. 33, the controller 9 executes the cutting mode M7 by executing the program 922 (more specifically, the machining program 922b). The cutting mode M7 includes cutting the workpiece W using the cutting tool 60.

More specifically, the cutting mode M7 may include transmitting a movement command (hereinafter, referred to as a "seventh movement command Q7") from the controller 9 to the second mover 8 so that the workpiece W gripped by the plurality of chuck jaws 1 including the first chuck jaw 1A is cut. Additionally, the cutting mode M7 may include transmitting a rotation command (hereinafter, referred to as an "eighth rotation command U8") from the controller 9 to the first rotary drive device 36.

The second mover 8 that receives the seventh movement command Q7 from the controller 9 causes the lathe tool T1 to come into contact with the workpiece W. The first rotary drive device 36 that receives the eighth rotation command U8 rotates the workpiece W about the first axis AX. Thus, the workpiece W is lathe turned with the lathe tool T1.

Alternatively, the cutting mode M7 may transmit, to the motor 66, the tool rotation command that causes the milling tool T2 to rotate. The motor 66 that receives the tool rotation command rotates the milling tool T2 about the central axis of the milling tool T2. Thus, the workpiece W is cut by the milling tool T2.

### (First Supporter 3)

In the example illustrated in FIG. 34, the first supporter 3 includes a housing 37. The housing 37 supports the chuck body 31 to be rotatable about the first axis AX. The first supporter 3 may include a mover 35 that moves the housing 37. The mover 35 moves the housing 37, for example, in a direction parallel to the first axis AX.

### (Second Supporter 4)

As illustrated in FIG. 34, the hybrid machine tool 100 may include the second supporter 4 that supports the workpiece W. In the example illustrated in FIG. 35, the second supporter 4 includes the second chuck body 41 and a second rotary drive device 46. The second group of chuck jaws 1S that grips the workpiece W is to be mounted on the second chuck body 41. The second rotary drive device 46 rotates the second chuck body 41 about a second axis AX2. As illustrated in FIG. 34, the second axis AX2 may be coaxial with the first axis AX.

The second chuck body 41 includes a movable portion 42 and a foot portion 43. The second group of chuck jaws 1S is to be mounted on the movable portion 42. The foot portion 43 movably supports the movable portion 42.

In the example illustrated in FIG. 34, the second supporter 4 includes a second jaw drive device 44. The second jaw drive device 44 moves the movable portion 42 on which the second group of chuck jaws 1S is mounted in a direction separating from the second axis AX2 or in a direction approaching the second axis AX2.

The second supporter 4 may include a second housing 47. The second housing 47 supports the second chuck body 41 to be rotatable about the second axis AX2. Further, the second supporter 4 may include a mover 45. The mover 45 moves the second housing 47. The mover 45 moves the second housing 47, for example, in a direction parallel to the second axis AX2.

### (Transfer Mode M8)

In the example illustrated in FIG. 34, the controller 9 executes a transfer mode M8 by executing the program 922 (more specifically, the machining program 922b).

The transfer mode M8 includes transferring the workpiece W from the first supporter 3 to the second supporter 4 using the first supporter 3 and the second supporter 4.

More specifically, in the example illustrated in FIG. 34, the transfer mode M8 includes (1) transmitting a first command S1 to at least one of the mover 35 of the first supporter 3 and the mover 45 of the second supporter 4 so that the second supporter 4 approaches the workpiece W gripped by the plurality of chuck jaws 1, (2) transmitting a second command S2 from the controller 9 to the second jaw drive device 44 so that the workpiece W is gripped by the second group of chuck jaws 1S, (3) transmitting a third command S3 from the controller 9 to the jaw drive device 34 so that the gripping of the workpiece W by the plurality of chuck jaws 1 is released, and (4) transmitting a fourth command S4 to at least one of the mover 35 of the first supporter 3 and the mover 45 of the second supporter 4 to cause at least one of the mover 35 of the first supporter 3 and the mover 45 of the second supporter 4 to move in a direction that separates the workpiece W from the first supporter 3.

In the example illustrated in FIG. 34, the mover 45 that receives the first control command S1 from the controller 9 causes the second supporter 4 to approach the workpiece W. The second jaw drive device 44 that receives the second command S2 from the controller 9 moves the movable portion 42 of the second chuck body 41 so that the workpiece W is gripped by the second group of chuck jaws 1S. The jaw drive device 34 that receives the third command S3 from the controller 9 moves the movable portion 32 of the chuck body 31 so that the gripping of the workpiece W by the plurality of chuck jaws 1 is released. The mover 45 that receives the fourth command S4 from the controller 9 moves the second supporter 4 that supports the workpiece W in a direction separating from the first supporter 3. Thus, the workpiece W is transferred from the first supporter 3 to the second supporter 4.

### (Second Additive Manufacturing Mode M9)

In the example illustrated in FIG. 35, the controller 9 executes a second additive manufacturing mode M9 by executing the program 922 (more specifically, the machining program 922b).

The second additive manufacturing mode M9 includes adding the fourth material G4 on the workpiece W gripped by the second group of chuck jaws 1S using the additive manufacturing apparatus 50. The fourth material G4 may be a material that is the same as the third material G3 or may be a material different from the third material G3.

### (Second Cutting Mode M10)

In the example illustrated in FIG. 36, the controller 9 executes a second cutting mode M10 by executing the program 922 (more specifically, the machining program 922b).

The second cutting mode M10 includes cutting the workpiece W gripped by the second group of chuck jaws 1S using the cutting tool 60.

### (Repairing Mode M11)

A repairing mode M11 is executed by executing the program 922 (more specifically, the jaw fabricating program 922a). In the example illustrated in FIG. 37 or 38, the repairing mode M11 is performed with the foot portion 11 of the first chuck jaw 1A being mounted on the chuck body 31.

In the example illustrated in FIG. 37 or 38, the repairing mode M11 includes forming the base surface 17 on the first chuck jaw 1A (more specifically, on the jaw body 13 or the metal layer 15) by cutting at least part of the metal layer 15 using the cutting tool 60.

More specifically, the repairing mode M11 includes transmitting a movement command (hereinafter, referred to as an "eighth movement command Q8") from the controller 9 to the second mover 8 and transmitting a rotation command (hereinafter, referred to as a "ninth rotation command U9") from the controller 9 to the first rotary drive device 36 so that the base surface 17 is formed on the first chuck jaw 1A.

The second mover 8 that receives the eighth movement command Q8 from the controller 9 moves the second head 62 so that the lathe tool T1 comes into contact with the metal layer 15. The first rotary drive device 36 that receives the ninth rotation command U9 from the controller 9 rotates the jaw body 13 about the first axis AX. Thus, the metal layer 15 is lathe turned with the lathe tool T1, and the base surface 17 is formed on the jaw body 13 or the metal layer 15.

In the example illustrated in FIG. 39, the repairing mode M11 includes reforming the metal layer 15 by adding the first metal material G1 on the base surface 17 using the additive manufacturing apparatus 50.

More specifically, the repairing mode M11 includes transmitting a movement command (hereinafter, referred to as a "ninth movement command Q9") from the controller 9 to the first mover 7 and transmitting an additive manufacturing command (hereinafter, referred to as a "third additive manufacturing command D3") from the controller 9 to the additive manufacturing apparatus 50 so that the first metal material G1 is added on the base surface 17. Additionally, the repairing mode M11 may include transmitting a rotation command (hereinafter, referred to as a "tenth rotation command U10") from the controller 9 to the first rotary drive device 36.

The first mover 7 that receives the ninth movement command Q9 from the controller 9 moves the first head 52 to a position facing the base surface 17. The additive manufacturing apparatus 50 that receives the third additive manufacturing command D3 from the controller 9 adds the first metal material G1 on the base surface 17.

In a case in which the tenth rotation command U10 is transmitted from the controller 9 to the first rotary drive device 36, the first rotary drive device 36 that receives the tenth rotation command U10 rotates the jaw body 13 about the first axis AX. In this case, the first metal material G1 is added on the base surface 17 without moving the first head 52 by a large amount.

In the example illustrated in FIG. 40, the repairing mode M11 includes smoothing the surface of the metal layer 15 by cutting, using the cutting tool 60, the metal layer 15 that has been reformed.

More specifically, the repairing mode M11 includes transmitting a movement command (hereinafter, referred to as a "tenth movement command Q10") from the controller 9 to the second mover 8 and transmitting a rotation command (hereinafter, referred to as an "eleventh rotation command U11") from the controller 9 to the first rotary drive device 36 so that the surface of the metal layer 15 that has been reformed is smoothed.

The second mover 8 that receives the tenth movement command Q10 from the controller 9 moves the second head 62 so that the lathe tool T1 comes into contact with the metal layer 15 that has been reformed. The first rotary drive device 36 that receives the eleventh rotation command U11 from the controller 9 rotates the jaw body 13 about the first axis AX. Thus, the metal layer 15 that has been reformed is lathe turned with the lathe tool T1, and the surface of the metal layer 15 is smoothed.

The repairing mode M11 may include forming grooves on the surface of the metal layer 15 by cutting, using the cutting tool 60, the metal layer 15 that has been reformed.

### (Program 922)

The program 922 according to the embodiment is a program that causes the hybrid machine tool 100 (more specifically, the controller 9 of the hybrid machine tool 100) to execute at least the first adding step (the third step ST3) and the second cutting step (the fourth step ST4) out of the method of fabricating the chuck jaw described above.

More specifically, the program 922 according to the embodiment is a program that causes the hybrid machine tool 100 (more specifically, the controller 9 of the hybrid machine tool 100) to execute the method of fabricating the chuck jaw including (1) adding the metal layer 15 including the first metal material G1 having a thermal conductivity lower than that of the second metal material on the jaw body 13 including the second metal material with the foot portion 11 of the first block BL1, which includes the foot portion 11 and the jaw body 13, being mounted on the chuck body 31 rotatable about the first axis AX, and (2) forming the cut surface 16s that is to come into contact with the workpiece W by cutting the metal layer 15 with the foot portion 11 being mounted on the chuck body 31.

The program 922 according to the embodiment may be a program that causes the hybrid machine tool 100 (more specifically, the controller 9 of the hybrid machine tool 100) to execute the method of fabricating the chuck jaw including the first cutting step (the second step ST2), the first adding step (the third step ST3), and the second cutting step (the fourth step ST4).

More specifically, the program 922 according to the embodiment may be a program that causes the hybrid machine tool 100 (more specifically, the controller 9 of the hybrid machine tool 100) to execute the method of fabricating the chuck jaw including (1) cutting the jaw body 13 with the foot portion 11 of the first block BL1, which includes the foot portion 11 and the jaw body 13, being mounted on the chuck body 31 rotatable about the first axis AX so that the base surface 130 is formed on the jaw body 13, (2) adding the metal layer 15 including the first metal material G1 having a thermal conductivity lower than that of the second metal material on the base surface 130 of the jaw body 13 including the second metal material with the foot portion 11 being mounted on the chuck body 31, and (3) forming the cut surface 16s that is to come into contact with the workpiece W on the metal layer 15 by cutting the metal layer 15 with the foot portion 11 being mounted on the chuck body 31.

The base surface 130 described above may include the first base surface 131 extending in a direction parallel to the first axis AX and the second base surface 132 perpendicular to the first axis AX. The cut surface 16s described above may include the first cut surface 16s-1 extending in a direction parallel to the first axis AX and the second cut surface 16s-2 perpendicular to the first axis AX.

The program 922 according to the embodiment may be a program that causes the hybrid machine tool 100 (more specifically, the controller 9 of the hybrid machine tool 100) to execute at least the above-described second step ST2, the above-described third step ST3, the above-described fourth step ST4, the above-described ninth step ST9, and the above-described twelfth step ST12. The program 922 according to the embodiment may be a program that causes the hybrid machine tool 100 (more specifically, the controller 9 of the hybrid machine tool 100) to execute at least the second step ST2 to the twelfth step ST12 described above. The program 922 according to the embodiment may be a program that causes the hybrid machine tool 100 (more specifically, the controller 9 of the hybrid machine tool 100) to execute the first step ST1 to the sixteenth step ST16 described above. Because the first step ST1 to the sixteenth step ST6 have already been described, repetitive descriptions of these steps are omitted.

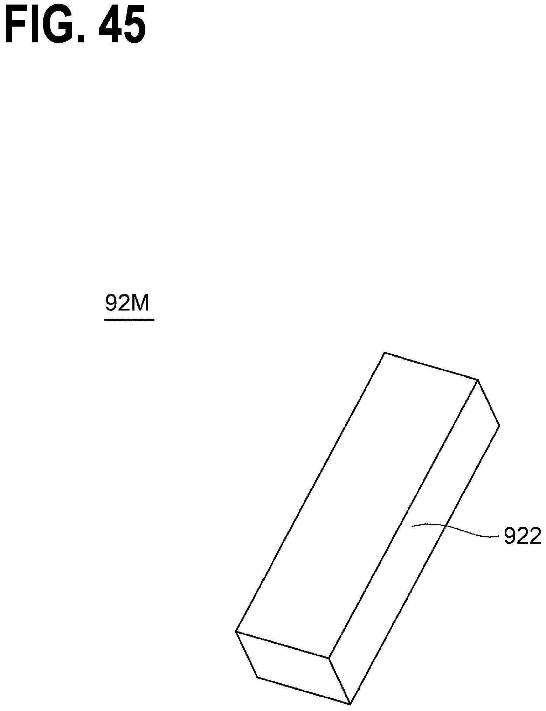

The memory 92 according to the embodiment may be a non-volatile storage medium that stores the above-described program 922. The non-volatile storage medium that stores the above-described program 922 may be a portable storage medium 92M as illustrated in FIG. 45.

It should be clearly understood that the present invention is not limited to the above-described embodiments or modifications, and each of the embodiments or modifications may be deformed or modified as required within the range of the technical ideas obtainable from the present invention. Various techniques used in each of the embodiments or modifications may be applied to other embodiments or modifications unless a technical contradiction arises. Furthermore, any optional structure in each of the embodiments or modifications may be omitted as required.

### Description of Reference Numerals

1...Chuck jaw, 1'...Chuck jaw, 1A...First chuck jaw, 1B...Second chuck jaw, 1C...Third chuck jaw, 1S...Second group of chuck jaws, 3... First supporter, 4... Second supporter, 5...Metal applicator, 7...First mover, 8... Second mover, 9...Controller, 11...Foot portion, 11B... Second foot portion, 11C...Third foot portion, 11s... Foot portion, 12... Held portion, 13...Jaw body, 13B...Second jaw body, 13C...Third jaw body, 13s...Jaw body, 15...Metal layer, 15B... Second metal layer, 15C... Third metal layer, 15a.. .First portion of metal layer, 15b... Second portion of metal layer, 15c... Third portion of metal layer, 15s...Metal layer, 16... Surface, 16-1... First surface, 16-2... Second surface, 16-3...Third surface, 16s...Cut surface, 16s-1.. .First cut surface, 16s-2... Second cut surface, 17, 17-1, 17-2...Base surface, 31...Chuck body, 32...Movable portion, 33...Foot portion, 34...Jaw drive device, 35...Mover, 36...First rotary drive device, 37...Housing, 39...Operation portion, 41... Second chuck body, 42...Movable portion, 43... Foot portion, 44... Second jaw drive device, 45...Mover, 46... Second rotary drive device, 47... Second housing, 50...Additive manufacturing apparatus, 51...Laser irradiation device, 52...First head, 55...Material supplying device, 56...Temperature sensor, 58...Preheating device, 60... Cutting tool, 62... Second head, 63...Rotating body, 64...Frame, 66...Motor, 70.. .First head mover, 71.. .First drive device, 72... Second drive device, 73...Tilting device, 80... Second head mover, 81... Third drive device, 82...Fourth drive device, 90.. Hardware processor, 92...Memory, 92M... Storage medium, 94... Communication circuit, 96... Input device, 98...Bus, 99...Timer, 100...Hybrid machine tool, 101... Stocker, 101a...Jaw holder, 102...Jaw exchanger, 102a.. .First unit, 102b... Second unit, 112...First engaging portion, 122... Second engaging portion, 130, 130B... Base surface, 131...First base surface, 132... Second base surface, 151...Additive manufacturing layer, 161, 161-1, 161-2, 161-3...Grooves, 312...Engaging portion, 922...Program, 922a... Jaw fabricating program, 922b...Machining program, 922c... Jaw exchanging program, 926, 926a, 926b, 926c, 926d, 926e, 926f, 926g, 926h..,Data, 962...Display with touch panel, BL1.. .First block, BL2... Second block, G1...First metal material, g1...Metal powder, G3...Third material, g3...Powder, G4...Fourth material, LB...Laser, M1...Jaw fabricating mode, M2...Removing mode, M3...Mounting mode, M4...Workpiece mounting mode, M5...Preheating mode, M6... Additive manufacturing mode, M7... Cutting mode, M8... Transfer mode, M9... Second additive manufacturing mode, M10... Second cutting mode, M11...Repairing mode, T... Cutting tool, T1...Lathe tool, T2...Milling tool, T3... Groove-forming tool, W, W2...Workpiece, Wa... Outer circumferential surface of workpiece, Wb... First end face of workpiece, Wc... Inner circumferential surface of workpiece, Wd... Second end face of workpiece, Wp... Original portion of workpiece, Wq... Added portion added on workpiece, Wr... Second added portion added on workpiece

## Claims

1. A chuck jaw comprising:
a foot portion configured to be mounted on a chuck body;
a jaw body; and
a metal layer configured to be added on the jaw body and come into contact with a workpiece, wherein
the metal layer comprises a first metal material, and the jaw body comprises a second metal material, the first metal material having a thermal conductivity lower than a thermal conductivity of the second metal material.

2. The chuck jaw according to claim 1, wherein all of a portion to come into contact with the workpiece comprises the metal layer.

3. The chuck jaw according to claim 1 or 2, wherein
the metal layer comprises
a first portion configured to come into contact with an outer circumferential surface of the workpiece, and
a second portion configured to come into contact with an end face of the workpiece.

4. The chuck jaw according to claim 1 or 2, wherein
the metal layer comprises
a third portion configured to come into contact with an inner circumferential surface of the workpiece, and
a second portion configured to come into contact with an end face of the workpiece.

5. The chuck jaw according to any one of claims 1 to 4, wherein the metal layer comprises an additive manufacturing layer.

6. The chuck jaw according to any one of claims 1 to 5, wherein the metal layer comprises a surface comprising a cut surface.

7. A method of fabricating a chuck jaw, the method comprising:
mounting, on a chuck body rotatable about a first axis, a foot portion of a first block comprising the foot portion and a jaw body; and
adding, on the jaw body, a metal layer that is to come into contact with a workpiece with the foot portion being mounted on the chuck body, wherein
the metal layer comprises a first metal material, and the jaw body comprises a second metal material, the first metal material having a thermal conductivity lower than a thermal conductivity of the second metal material.

8. The method of fabricating the chuck jaw according to claim 7, wherein adding the metal layer on the jaw body is performed by an additive manufacturing apparatus.

9. The method of fabricating the chuck jaw according to claim 7 or 8, further comprising
cutting the jaw body so that a first base surface extending in a direction parallel to the first axis and a second base surface perpendicular to the first axis are formed on the jaw body with the foot portion being mounted on the chuck body, wherein
adding the metal layer on the jaw body comprises adding the metal layer on both of the first base surface and the second base surface.

10. The method of fabricating the chuck jaw according to any one of claims 7 to 9, further comprising:
removing the chuck jaw from the chuck body, the chuck jaw comprising the foot portion, the jaw body, and the metal layer added on the jaw body; and
carrying the chuck jaw that has been removed from the chuck body to a stocker, wherein
removing the chuck jaw from the chuck body and carrying the chuck jaw to the stocker are automatically performed by a jaw exchanger.

11. The method of fabricating the chuck jaw according to any one of claims 7 to 10, further comprising:
mounting, on the chuck body, a second block comprising a second jaw body comprising the second metal material;
adding, on the second jaw body, a second metal layer comprising the first metal material; and
cutting the metal layer and the second metal layer so that a surface of the metal layer and a surface of the second metal layer are smoothed, wherein
cutting the metal layer and the second metal layer comprises repeatedly bringing a lathe tool into contact with the metal layer and the second metal layer that are rotated about the first axis, and
smoothing of the surface of the metal layer and smoothing of the surface of the second metal layer are performed in parallel using the lathe tool.

12. A method of machining a workpiece, the method comprising:
fabricating a first chuck jaw;
mounting the workpiece on a plurality of chuck jaws comprising the first chuck jaw; and
machining the workpiece, wherein
fabricating the first chuck jaw comprises
mounting, on a chuck body rotatable about a first axis, a foot portion of a first block comprising the foot portion and a jaw body, and
adding a metal layer on the jaw body with the foot portion being mounted on the chuck body,
machining the workpiece comprises adding a third material on the workpiece using an additive manufacturing apparatus with the metal layer of the first chuck jaw being in contact with the workpiece, and
the metal layer comprises a first metal material, and the jaw body comprises a second metal material, the first metal material having a thermal conductivity lower than a thermal conductivity of the second metal material.

13. A method of repairing the chuck jaw according to any one of claims 1 to 6, the method comprising:
forming a base surface by cutting at least part of the metal layer;
reforming the metal layer by adding the first metal material on the base surface; and
cutting the metal layer to smooth a surface of the reformed metal layer.

14. A hybrid machine tool comprising:
an additive manufacturing apparatus comprising a material supplying device and a first head configured to emit a laser;
a cutting tool comprising a second head configured to support a tool;
a first supporter configured to support a workpiece via a plurality of chuck jaws comprising a first chuck jaw;
a first mover configured to move the first head relative to the first supporter;
a second mover configured to move the second head relative to the first supporter; and
a controller configured to control at least the additive manufacturing apparatus, the cutting tool, the first supporter, the first mover, and the second mover, wherein
the first supporter comprises
a chuck body on which a foot portion of the first chuck jaw comprising the foot portion and a jaw body is mounted and that is rotatable about a first axis,
a jaw drive device configured to move the plurality of chuck jaws in a first direction separating from the first axis or in a second direction approaching the first axis, and
a first rotary drive device configured to rotate the chuck body about the first axis,
the controller is capable of executing a jaw fabricating mode performed with the foot portion being mounted on the chuck body and an additive manufacturing mode performed with the workpiece being gripped by the plurality of chuck jaws comprising the first chuck jaw,
the jaw fabricating mode comprises
adding a metal layer comprising a first metal material on the jaw body comprising a second metal material using the additive manufacturing apparatus, the first metal material having a thermal conductivity lower than a thermal conductivity of the second metal material, and
smoothing a surface of the metal layer by cutting the metal layer using the cutting tool, and
the additive manufacturing mode comprises adding a third material on the workpiece that is in contact with the metal layer of the first chuck jaw using the additive manufacturing apparatus.

15. A program that causes a hybrid machine tool to execute a method of fabricating a chuck jaw, the program comprising:
adding a metal layer comprising a first metal material on a jaw body comprising a second metal material with a foot portion of a first block comprising the foot portion and the jaw body being mounted on a chuck body rotatable about a first axis, the first metal material having a thermal conductivity lower than a thermal conductivity of the second metal material; and
forming a cut surface that is to come into contact with a workpiece by cutting the metal layer with the foot portion being mounted on the chuck body.
